# EUROPÄISCHE PATENTSCHRIFT

(11) **EP 4 118 018 B1**
(45) Veröffentlichungstag und Bekanntmachung des Hinweises auf die Patenterteilung: **25.06.2025**
(21) Anmeldenummer: 20716155.5
(22) Anmeldetag: 20.03.2020
(51) Int. Cl.: B65G 49/06, B65G 15/10, B65G 37/00, B65G 47/08, C03B 35/14, C03B 35/16, F27B 9/20, F27B 9/24

(54) **BELADESYSTEM**
LOADING SYSTEM
SYSTÈME DE CHARGEMENT

(43) Veröffentlichungstag der Anmeldung: 18.01.2023
(73) Patentinhaber: Haselsteiner, Hubert, 3332 Biberbach (AT)
(72) Erfinder: Haselsteiner, Hubert, 3332 Biberbach (AT)
(74) Vertreter: KLIMENT & HENHAPEL
(86) Internationale Anmeldenummer: PCT/EP2020/057786
(87) Internationale Veröffentlichungsnummer: WO 2021/185455

(56) Entgegenhaltungen:
- WO-A1-2009/037753
- WO-A1-2013/150787
- DE-C1- 3 341 207
- US-A1- 2014 291 125

## Beschreibung

### GEBIET DER ERFINDUNG

Die Erfindung betrifft ein Beladesystem für, vorzugsweise plattenförmige, Objekte, umfassend ein Fördergestell mit mindestens einer durch ein oder mehrere Fördermittel ausgebildeten Förderebene für die plattenförmigen Objekte.

Außerdem betrifft die Erfindung die Verwendung des erfindungsgemäßen Beladesystems zum Beladen eines Härteofens mit Glasplatten.

Darüber hinaus betrifft die Erfindung ein Verfahren zum Beladen eines Fördergestells mit plattenförmigen Gegenständen.

### STAND DER TECHNIK

Damit Glas fester und hitzeresistenter wird und auf eine Art und Weise bricht, die Verletzungen wesentlich reduziert, wird es gehärtet. Gehärtetes Glas, oft auch als Sicherheitsglas bzw. thermisch vorgespanntes Glas (ESG) bezeichnet, wird für Eingangstüren, Duschkabinen, Türen von Holzöfen und Kaminen und überall dort, wo festes, sicheres Glas nötig ist, eingesetzt. Das Härten von Glas ist ähnlich wie das Härten von Stahl. Zuerst wird das Glas in Platten der gewünschten Form geschnitten, dann werden die Schnittränder gesäumt, geschliffen oder poliert und das Glas von Schmutz gereinigt und schließlich werden die Glasplatten in einem entsprechenden Ofen auf Temperaturen von über 600°C erhitzt und danach rasch abgekühlt, wodurch sich die äußere Oberfläche der Glasplatte schneller zusammenzieht als die Mitte, was dem Glas seine Festigkeit verleiht.

Für das Härten im Ofen kommen unterschiedliche Beladesysteme zum Einsatz. Eines dieser Beladesysteme umfasst typischerweise ein Fördergestell (welches in der Praxis auch als Beladetisch, Einlauftisch, Bett oder Härtebett bezeichnet wird). Auf dieses Fördergestell werden die Glasplatten geladen. Das Fördergestell ist mit Fördermitteln (beispielsweise Transportwalzen oder -rollen) und einem heb- und senkbaren Rahmengestell mit Topfrollen ausgestattet. Ist das Rahmengestell angehoben, können Glasplatten manuell auf den Topfrollen aufgelegt und über die Breite des Fördergestells einlaufseitig abgelegt bzw. positioniert werden. Danach wird das Rahmengestell unter die Transportwalzen abgesenkt und die aufgelegten Glasplatten liegen nun auf den Transportwalzen. Nun werden die aufgelegten Glasplatten manuell gesteuert in Richtung des Härteofens, also in Längsrichtung des Fördergestells, weitertransportiert, bis auf dem Fördergestell wieder genug Platz ist, um weitere Glasplatten auflegen zu können. Ist durch das manuelle Beladen die nutzbare Fläche des Fördergestells mit einzelnen Glasplatten ausgelegt, werden alle auf dem Fördergestell angeordneten Glasplatten, also die gesamte Bettbeladung, durch manuelle Freigabe in den Härteofen eintransportiert. Die Beladung des Fördergestells mit den Platten erfolgt zum überwiegenden Teil manuell. Bei größeren Anlagen wird aber auch ein Roboter eingesetzt, der meist vor dem Fördergestell oder an einer Längsseite des Fördergestells oder einem zusätzlich davor angeordneten Beladetisch angeordnet ist.

Beispielsweise ist aus der DE 33 41 207 C1 eine solche Beschickungsvorrichtung für einen Horizontal-Durchlaufofen zum Erwärmen von Glasscheiben bekannt geworden.

Unabhängig davon, ob die Beladung per Hand oder mittels Roboters erfolgt, wird üblicherweise nur eine Platte gleichzeitig bzw. wird eine Glasplatte nach der Anderen über die Breite des Fördergestells auf den Tisch geladen, die, sobald sie aufliegen, weitertransportiert werden. Die Beladung wird gestoppt, sobald die erste Platte das dem Ofen zugewandte Ende des Fördergestells erreicht hat. Das Fördergestell ist zu diesem Zeitpunkt im Normalfall der Länge nach mit hinter- und nebeneinander angeordneten Platten belegt.

Üblicherweise wird eine Beladung nur mit Platten von im Wesentlichen gleicher bzw. ähnlicher Abmessung, aber nur einer einzigen Glasdicke vorgenommen, da dies für die anschließende Glashärtung erforderlich ist. Insbesondere wenn zum Beladen ein Roboter eingesetzt wird, ist darauf zu achten, dass sich die einzelnen Platten in ihrem Gewicht wenig voneinander unterscheiden, da je nach Programmierung des Roboters nur in einem bestimmten Gewichtsbereich gearbeitet werden kann.

Wenn die Platten aber nicht von ähnlicher Größe sind, dass sich eine einzelne Platte über annähernd die gesamte Breite des Fördergestells erstreckt, bleibt ein Teil des Fördergestells frei, der unter Umständen erheblich sein kann. Das Fördergestell ist in diesem Fall nicht ausgelastet.

Eine optimale Auslastung des Fördergestells und somit des Härteofens ist essentiell für ein kosteneffizientes Glashärten. Außerdem bedeutet eine effizientere Beladung des Fördergestells auch eine wesentliche Reduktion der Härtekosten pro m² gehärtetem Glas. Eine schlechte Belegung des Fördergestells und somit auch des Härteofens macht jede Glashärteanlage sehr ineffizient und bedeutet eine hohe Energieverschwendung, wenn man bedenkt, dass eine Härteanlage mittlerer Größe einen Anschlusswert von ca. 1500 - 1700 kW hat.

Können Platten unterschiedlicher Größe nicht gleichzeitig in einer einzigen Beladung berücksichtigt werden, ist die Variabilität und Flexibilität der Ofenanlage erheblich eingeschränkt.

Die Anzahl der gleichzeitig auf das Fördergestell ladbaren Platten kann zwar erhöht werden, z.B. indem mehrere Platten nebeneinander durch den Einsatz mehrerer Roboter auf das Fördergestell aufgelegt werden, doch wird dadurch die Komplexität der Anlage erhöht und die Zugänglichkeit zum Fördergestell erschwert oder gar verhindert. Der Einsatz von Robotern zur Beladung des Fördergestells hat außerdem den weiteren Nachteil, dass dabei Saugvorrichtungen eingesetzt werden, die an der sensiblen Oberfläche der Platten ansetzen und diese damit beeinträchtigen können.

Durch die sehr unterschiedlichen Gewichte der Platten müssen teilweise mehrere Roboter mit unterschiedlichen Hebeleistungen und bei größeren Härteanlagen Roboter beidseitig des Fördergestells bzw. der Bettbeladung eingesetzt werden. Das erhöht Platzbedarf und Investitionskosten bedeutend und verringert die Effizienz des Beladesystems ganz wesentlich. Somit werden automatische Beladesystems, also Härtebettbeladungen mit Robotern, nur sehr selten eingesetzt und wenn, dann im Wesentlichen nur für kleinere Plattengrößen und geringere Plattendicken.

Weiters sind beispielsweise aus der US 2014/0291125 A1 ein Rollenförderer und eine allgemeine Transportvorrichtung für Glasplatten bekannt, wobei sowohl Hebeeinheiten, als auch Fördermittel zum Transport der Glasplatten vorgesehen sind.

Aus der WO 2013/150787 A1 sind beispielsweise eine Vorrichtung sowie ein Verfahren zur Herstellung von Flüssigkristallanzeigen von Flachbildschirmen bekannt, wobei die Vorrichtung dazu dient, das in einem Lithographieprozess auf einer Photomaske gebildete Muster zur Herstellung der Flüssigkristallanzeigekomponenten mittels Energiestrahls exakt auf ein Glassubstrat zu übertragen.

### AUFGABE DER ERFINDUNG

Die Erfindung stellt sich daher die Aufgabe, die oben genannten Nachteile zu beseitigen.

Insbesondere soll ein Beladesystem für, vorzugsweise plattenförmige, Objekte bereitgestellt werden, welches ein vollautomatisches Beladen eines Härtebetts erlaubt, wobei plattenförmige Objekte verschiedener Größen und in beliebiger Reihenfolge angeordnet werden können.

Eine weitere Aufgabe der Erfindung besteht darin, ein Beladesystem mit einer Hebeeinheit bereitzustellen, mittels welcher ein Beladen eines Härtebetts mit, vorzugsweise plattenförmigen, Objekten unterschiedlicher Größen und in beliebiger Reihenfolge ermöglicht wird.

Eine weitere Aufgabe der Erfindung besteht darin, ein Verfahren zum Beladen eines Fördergestells mit, vorzugsweise plattenförmigen, Objekten bereitzustellen, bei dem plattenförmige Objekte unterschiedlicher Größen und voneinander unabhängig auf das Fördergestell aufgebracht werden können.

### DARSTELLUNG DER ERFINDUNG

Eine Aufgabe der Erfindung wird durch ein Beladesystem für, vorzugsweise plattenförmige, Objekte, insbesondere für Glasplatten, umfassend ein Fördergestell mit mindestens einer durch mehrere Fördermittel ausgebildeten Förderebene für die plattenförmigen Objekte, gelöst, indem
- das Beladesystem Hebeeinheiten aufweist, welche Hebeeinheiten unterhalb der mindestens einen Förderebene angeordnet sind, wobei
- die Hebeeinheiten jeweils eine durch zumindest ein Auflageelement ausgebildete Auflagefläche für die plattenförmigen Objekte aufweisen, welche Auflagefläche zwischen einer Position unterhalb der mindestens einen Förderebene und einer Position oberhalb der mindestens einen Förderebene bewegbar ist,
wobei beim erfindungsgemäßen Beladesystem eine Steuer- und/oder Regelvorrichtung vorgesehen ist, die dazu eingerichtet ist, die Fördermittel individuell und/oder in Gruppen zusammengeschlossen anzusteuern und/oder zu regeln, wobei die von der Steuer-/und oder Regelvorrichtung individuell und/oder als Gruppe angesteuerten und/oder geregelten Fördermittel jeweils mittels eines separaten Antriebsmittels angetrieben sind, und wobei das Beladesystem dazu eingerichtet ist, ein erstes plattenförmiges Objekt mittels der Fördermittel an eine erste Förderposition auf dem Fördergestell zu fördern sowie mittels der Hebeeinheiten an der ersten Förderposition von den Fördermitteln abzuheben, um weitere plattenförmige Objekte mittels der selben Fördermittel auf dem Fördergestell in eine jeweilige Förderposition zu bringen, ohne dabei das erste plattenförmige Objekt zu bewegen.

Plattenförmige Objekte, die sich auf der zumindest einen Förderebene befinden, können mittels der Hebeeinheiten von der Förderebene beabstandet - sprich: von den die Förderebene ausbildenden Fördermitteln abgehoben - werden. Dazu umfassen die Hebeeinheiten jeweils zumindest ein Auflageelement, welches von unten - also von unterhalb der den jeweiligen Hebeeinheiten zugeordneten Förderebene - mit dem betreffenden plattenförmigen Objekt in Kontakt gebracht und anschließend weiter angehoben wird, sodass das jeweilige Auflageelement mit einer Außenfläche des plattenförmigen Objekts in Kontakt gebracht wird und in weiterer Folge das plattenförmige Objekt mittels des Auflageelementes von der Förderebene abgeboben wird. Das plattenförmige Objekt kann demnach entweder auf der durch die jeweiligen Fördermittel ausgebildeten Förderebene, oder auf einer oberhalb dieser Förderebene angeordneten Auflageebene aufliegen, welche Auflageebene durch eine oder mehrere Auflageflächen ausgebildet ist.

Die mittels des erfindungsgemäßen Beladesystems gehandhabten Objekte weisen zumindest eine annäherungsweise ebene Außenfläche auf, mit welcher die Objekte auf der Förderebene bzw. der Auflageebene gelagert sind. Die Form der jeweiligen Objekte in anderen, von der besagten Außenfläche verschiedenen Bereichen, etwa an einer Außenseite, die der Außenfläche gegenüber liegt, ist grundsätzlich irrelevant. Insbesondere können mittels des erfindungsgemäßen Beladesystems auch Objekte gehandhabt werden, die nicht plattenförmig ausgebildet sind. Auch dies ist ein Vorteil gegenüber dem Stand der Technik, da im Zusammenhang mit bekannten Beladesystemen nur solche Gegenstände verarbeitet werden können, deren von außen bzw. oben zugängliche Außenfläche eben ausgebildet ist; andernfalls können die von den Arbeitern oder Roboterarmen zum Positionieren der Objekte auf dem Fördergestell verwendeten Saugvorrichtungen nicht zuverlässig eingesetzt werden.

Das erfindungsgemäße Beladesystem ermöglicht es somit, ein erstes plattenförmiges Objekt mittels der Fördermittel zu fördern, dieses erste plattenförmige Objekt anschließend, also nachdem das erste plattenförmige Objekt eine bestimmte Position auf dem Fördergestell erreicht hat, mittels der Hebeeinheiten von den Fördermitteln abzuheben, um weitere plattenförmige Objekte mittels der selben Fördermittel auf dem Fördergestell in Position zu bringen, ohne dabei das erste plattenförmige Objekt zu bewegen. Dabei kann das Fördergestell auch zumindest einen Abschnitt mit herkömmlichen - also nicht erfindungsgemäßen - Fördermitteln und/oder Hebeeinheiten umfassen. Auch können die Förderebenen unterschiedlicher Fördermittel des Fördergestells in unterschiedlichen Ebenen angeordnet sein; beispielsweise kann einen Förderebene, die durch Förderwalzen oder -rollen ausgebildet ist, oberhalb einer durch Riemenförderer ausgebildeten Förderebene liegen.

Bei einer bevorzugten Ausführungsform des erfindungsgemäßen Beladesystems umfassen die Fördermittel Riemenförderer, Förderwalzen oder Förderrollen.

Dadurch kann das Beladesystem an unterschiedliche Anforderungen angepasst und insbesondere auf verschiedene Arten plattenförmiger Objekte abgestimmt werden. Auch wird es möglich, die plattenförmigen Objekte in unterschiedliche Richtungen zu fördern, beispielsweise indem die Fördermittel sowohl Riemenförderer als auch zwischen den einzelnen Riemenförderern angeordnete Förderwalzen und/oder Förderrollen umfassen, welche gegengleich angehoben bzw. abgesenkt werden können, um jeweils die Förderebene auszubilden. Dabei können die Achsen der Förderwalzen oder -rollen parallel zu den Riemenförderern verlaufen.

Bei einer weiteren bevorzugten Ausführungsform des erfindungsgemäßen Beladesystems ist eine Steuer- und/oder Regelvorrichtung vorgesehen, welche dazu eingerichtet ist, die Hebeeinrichtungen individuell und/oder in Gruppen zusammengeschlossen anzusteuern und/oder zu regeln.

So können einzelne der auf dem Fördergestell positionierten plattenförmigen Objekte gezielt von der Förderebene abgehoben bzw. wieder auf die Förderebene abgesenkt werden. Auch wird es möglich, auf dem Fördergestell angeordnete plattenförmige Objekte beliebiger Größe von den Fördermitteln abzuheben und wieder mit den Fördermitteln in Eingriff zu bringen.

Beim erfindungsgemäßen Beladesystem ist eine Steuer- und/oder Regelvorrichtung vorgesehen, die dazu eingerichtet ist, die Fördermittel individuell und/oder in Gruppen zusammengeschlossen anzusteuern und/oder zu regeln.

Dadurch wird es möglich, zu einem bestimmten Zeitpunkt beispielsweise nur eine Teilmenge der Fördermittel des Fördergestells zu betätigen. So können etwa nur diejenigen Fördermittel betätigt werden, die erforderlich sind, um ein erstes plattenförmiges Objekt an seine vorbestimmte Position auf dem Fördergestell zu befördern; andere Fördermittel, auf denen mitunter bereits andere plattenförmige Objekte positioniert sind, können dabei in Ruhe belassen werden bzw. in ihrer aktuellen Position verbleiben. Alternativ können weitere plattenförmige Objekte asynchron mit dem ersten plattenförmigen Objekt an ihre vorbestimmte Position auf dem Fördergestell bewegt werden.

Beim erfindungsgemäßen Beladesystem sind die von der Steuer- und/oder Regelvorrichtung individuell und/oder als Gruppe angesteuerten und/oder geregelten Fördermittel jeweils mittels eines separaten Antriebsmittels, etwa eines Motors, angetrieben bzw. antreibbar.

Dadurch kann das erfindungsgemäße Beladesystem besonders energieeffizient betrieben werden, da jeweils nur diejenigen Antriebsmittel betätigt werden müssen, die den jeweiligen, durch die Steuer- und/oder Regelvorrichtung angesteuerten und/oder geregelten Fördermitteln zugeordnet sind.

Bei einer anderen bevorzugten Ausführungsform des erfindungsgemäßen Beladesystems sind die Hebeeinheiten, vorzugsweise lösbar, an den Fördermitteln befestigt.

Dadurch können die Hebeeinheiten eines erfindungsgemäßen Fördergestells auf besonders einfache und rasche Weise ausgetauscht werden. Zudem wird es möglich, bestehende Fördergestelle mit erfindungsgemäßen Hebeeinheiten nachzurüsten. Besonders bevorzugt sind die Hebeeinheiten klickbar mit den Fördermitteln verbunden bzw. verrasten die Hebeeinheiten mit den Fördermitteln. Alternativ ist auch eine Anordnung bzw. Befestigung der Hebeeinheiten mit anderen Bestandteilen des Fördergestells möglich, etwa mit einem Gestell des Fördergestells, auf welchem die Fördermittel gelagert sind.

Bei einer anderen bevorzugten Ausführungsform des erfindungsgemäßen Beladesystems weisen die Hebeeinheiten Mittel zur lösbaren Befestigung an einem Fördermittel auf.

So können die Hebeeinheiten als modulare Verschleißteile angeboten und auf besonders einfache Weise nachgerüstet werden, was insbesondere unter Berücksichtigung der vergleichsweise hohen Beanspruchung der Hebeeinheiten, verglichen mit jener der Fördermittel, zu einer deutlichen Kostenersparnis hinsichtlich der Wartung des erfindungsgemäßen Beladesystems führt.

Bei einer weiteren bevorzugten Ausführungsform des erfindungsgemäßen Beladesystems handelt es sich bei den Mitteln zur lösbaren Befestigung um zumindest eine Rastnase und/oder eine Rastnut.

Durch Verrastung der Hebeeinheit mit dem Fördermittel kann eine zuverlässige Befestigung der Hebeeinheit an dem Fördermittel sichergestellt werden; gleichzeitig kann die Verbindung auf einfache Weise wieder gelöst werden, indem die Rastnase und/oder die Rastnut der Hebeeinheiten außer Eingriff mit den entsprechenden Abschnitten des Fördermittels gebracht werden.

Bei einer anderen bevorzugten Ausführungsform des erfindungsgemäßen Beladesystems weisen das oder die Fördermittel eine, vorzugsweise profilartig ausgebildete, Tragestruktur auf und sind die Hebeeinheiten an der Tragestruktur, vorzugsweise lösbar, befestigt.

Somit umfasst das erfindungsgemäße Fördermittel zumindest ein eigentliches Mittel zum Fördern, beispielsweise einen Riemen, eine Walze oder eine Rolle, und andererseits die Tragestruktur, in welcher dieses Mittel zum Fördern geführt bzw. gehalten ist. Darüber hinaus kann das Fördermittel auch noch weitere Elemente umfassen, wie etwa Umlenkrollen, über die ein Förderband im Bereich der Endabschnitte der Tragestruktur umgelenkt wird. Bevorzugt sind die Hebeeinheiten des Beladesystems über die Tragestruktur mit dem jeweiligen Fördermittel verbunden. Dadurch wird eine Anordnung der Hebeeinheiten im Bereich der durch die Fördermittel ausgebildeten Förderebene ermöglicht, sodass die Auflageelemente der Hebeeinheiten problemlos mit den auf der Förderebene gelagerten plattenförmigen Objekten in Kontakt gebracht und die durch die Auflageelemente ausgebildete Auflagefläche in weiterer Folge über die Förderebene angehoben werden kann. Um insbesondere Riemen eines Riemenförderers zuverlässig und präzise führen zu können, sind die Tragestrukturen der Fördermittel bevorzugt als ein Profil, also profilartig, beispielsweise aus Aluminium ausgebildet. An Abschnitten dieses Profils können die Hebeeinheiten vorzugsweise lösbar, etwa über eine Klick- oder Rastverbindung, befestigt werden.

Zu diesem Zweck weist die Tragestruktur in einer bevorzugten Ausführungsform des erfindungsgemäßen Beladesystems Mittel zur, vorzugsweise lösbaren, Befestigung der Hebeeinheiten auf.

Dabei können diese Mittel zur, vorzugsweise lösbaren, Befestigung der Hebeeinheiten insbesondere an von außen zugänglichen Seitenteilen der Tragestruktur vorgesehen sein; dadurch wird die Verbindung von Hebeeinheit mit Fördermittel weiter vereinfacht.

Bei einer weiteren bevorzugten Ausführungsform des erfindungsgemäßen Beladesystems handelt es sich bei den Mitteln zur lösbaren Befestigung um eine Rastnase und/oder eine Rastnut.

Die Rastnase und/oder die Rastnut der Tragestruktur kann jeweils mit einem entsprechenden Abschnitt der Hebeeinheit zusammenwirken, um eine Befestigung der Hebeeinheit an der Tragestruktur zu ermöglichen.

Bei einer anderen bevorzugten Ausführungsform des erfindungsgemäßen Beladesystems umfasst die zumindest eine, vorzugsweise jede, Hebeeinheit einen Führungsrahmen, an oder in welchem das zumindest eine Auflageelement bewegbar, vorzugsweise linear verschiebbar, gehalten ist.

Auf diese Weise wird es möglich, die Hebeeinheit als ein kompaktes Modul mit einfachem Aufbau auszuführen. Durch das entlang oder innerhalb des Führungsrahmens verschiebbar gelagerte Auflageelement kann die Auflagefläche auf besonders einfache Weise aus der Position unterhalb der jeweiligen Förderebene in eine Position oberhalb der jeweiligen Förderebene bewegt werden. Insbesondere muss das verschiebbare Auflageelement lediglich für den Hebevorgang, also für das Bewegen der Auflagefläche in die Position oberhalb der Förderebene, beispielsweise pneumatisch, hydraulisch oder elektromechanisch, betätigt werden; um das Auflageelement wieder zurück in die Position unterhalb der Förderebene zu bringen, genügt aufgrund der verschiebbaren Lagerung an oder in dem Führungsrahmen der Hebeeinheit das Eigengewicht des auf der Auflagefläche aufliegenden flächigen Objektes.

Bei einer weiteren bevorzugten Ausführungsform des erfindungsgemäßen Beladesystems weist der Führungsrahmen zumindest zwei Befestigungsschenkel auf, über welche die Befestigung der Hebeeinheit an einem Fördermittel, vorzugsweise an dessen Tragestruktur, erfolgt.

Insbesondere können die Mittel zur lösbaren Befestigung der Hebeeinheit an dem Fördermittel an den Befestigungsschenkeln des Führungsrahmens angeordnet oder durch Abschnitte der Befestigungsschenkel ausgebildet sein. Beispielsweise können die Befestigungsschenkel Rastnasen aufweisen, die mit korrespondierenden Rastnuten, die an der Tragestruktur vorgesehen sind, in Eingriff gebracht werden, um die Hebeeinheit mittels Klick- oder Rastverbindung an dem Fördermittel zu befestigen.

Bei einer weiteren bevorzugten Ausführungsform des erfindungsgemäßen Beladesystems ist der Abstand zwischen den zumindest zwei Befestigungsschenkeln mittels zumindest eines, vorzugsweise im Führungsrahmen gehaltenen, Fixierelementes einstellbar.

Dadurch kann über die Einstellung des Abstands zwischen den Befestigungsschenkeln auch eine Anpresskraft, unter welcher die Befestigungsschenkel gegen das Fördermittel, insbesondere gegen dessen Tragestruktur, gepresst werden, vorgegeben werden. Somit wird es mögliche, die auf das Fördermittels aufgeklickte bzw. die mit dem Fördermittel verrastete Hebeeinheit in ihrer Position an dem Fördermittel zu fixieren und gegen Verrutschen und/oder unbeabsichtigtes Lösen der Verbindung zu sichern. Vorzugsweise kann es sich bei dem Fixierelement um eine Schraube bzw. Stellschraube handeln, die in jedem der beiden, einander gegenüberliegenden Befestigungsschenkel gelagert ist.

Bei einer anderen bevorzugten Ausführungsform des erfindungsgemäßen Beladesystems ist am oder im Führungsrahmen zumindest ein die Bewegbarkeit des zumindest einen Auflageelementes bewirkendes Schieberelement bzw. Schiebeelement angeordnet, wobei das zumindest eine Auflageelement in einem der Förderebene zugewandten Abschnitt des Schieberelementes angeordnet ist.

Das Auflageelement lässt sich somit mittels des Schieberelementes entlang des Führungsrahmens bewegen, um die Auflagefläche des Auflageelementes aus der Position unterhalb der Förderebene in die Position oberhalb der Förderebene zu bewegen. Dabei ist das Auflageelement in einem Abschnitt des Schieberelementes angeordnet oder durch einen solchen Abschnitt ausgebildet, welcher Abschnitt der Förderebene zugewandt ist, wenn sich das Auflageelement unterhalb der Förderebene befindet. Insbesondere kann das Schieberelement zischen zwei Abschnitten des Führungsrahmens geführt sein; alternativ kann der Führungsrahmen auch zwischen zwei Schieberelementen angeordnet sein, wobei die beiden Schieberelemente jeweils entlang des Führungsrahmens verschiebbar sind. Auf jedem Schieberelement können ein oder mehrere Auflageelemente angeordnet bzw. ausgebildet sein, wobei jedoch kein Abschnitt des jeweiligen Schieberelementes bzw. des Führungsrahmens über die Auflageelemente hinaus abstehen sollte.

Bei einer anderen bevorzugten Ausführungsform des erfindungsgemäßen Beladesystems ist das Schieberelement am oder im Führungsrahmen beweglich, vorzugsweise linear verschiebbar, gehalten.

Somit kann durch Verschieben des Schieberelementes die Position des oder der Auflageelemente verändert werden. Insbesondere können mehrere Auflageelemente synchron miteinander durch Betätigung eines einzigen Schieberelementes aus ihrer Position unterhalb in die Position oberhalb der Förderebene bewegt werden.

Bei einer weiteren bevorzugten Ausführungsform des erfindungsgemäßen Beladesystems ist am Führungsrahmen ein mit dem zumindest einen Auflageelement, vorzugsweise mit dem zumindest einen Schieberelement, in Wirkverbindung stehender Antrieb für die Bewegung des zumindest einen Auflageelementes bzw. Schieberelementes angeordnet.

Der Antrieb, welcher direkt oder indirekt mit dem Führungsrahmen verbunden sein kann, dient zur Betätigung des oder der Auflageelemente. Dadurch, dass jede Hebeeinheit ihren eigenen Antrieb umfasst, lässt sich die Hebeeinheit als eigenständiges Modul ausführen, welches auf einfache Weise ausgetauscht bzw. nachgerüstet werden kann. Besonders vorteilhaft ist dabei, dass eine Fehlfunktion eines Antriebs keinerlei Auswirkung auf die Funktionsfähigkeit anderer Hebeeinheiten des Beladesystems haben. Das erfindungsgemäße Beladesystem ist dadurch zuverlässiger als aus dem Stand der Technik bekannte Beladesysteme; außerdem kann eine defekte Hebeeinheit ausgetauscht werden, ohne dafür den Betrieb der übrigen Hebeeinheiten bzw. des Beladesystems einstellen zu müssen. Bei dem Antrieb kann es sich um eine pneumatisch, hydraulisch oder elektromechanisch betätigbare Kolben-Zylinder-Einheit handeln, wobei ein mit dem Kolben verbundener oder einstückig mit dem Kolben ausgebildeter Stößel mit den Auflageelementen in Wirkverbindung steht, um diese bei Betätigung der Kolben-Zylinder-Einheit antreiben zu können. Vorzugsweise ist der Stößel dabei durch eine Ausnehmung des Führungsrahmens, beispielsweise eine Ausnehmung in einer Basisplatte des Führungsrahmens, geführt und greift der Stößel direkt oder indirekt an das Schieberelement an, sodass durch Bewegung des Schieberelementes die Auflageelemente angehoben und/oder abgesenkt werden können. Bei Ausführungsvarianten der Hebeeinheit mit mehreren Schieberelementen kann der Stößel mit beiden Schieberelementen verbunden sein, um diese synchron miteinander bewegen zu können.

Bei einer anderen bevorzugten Ausführungsform des erfindungsgemäßen Beladesystems umfasst eine Hebeeinheit zumindest zwei zueinander beabstandete Auflageelemente, wobei zwischen den zumindest zwei Auflageelementen ein Fördermittel verlaufend angeordnet ist.

Dadurch kann die jeweilige Hebeeinheit beidseits des Förderelementes gleichmäßig belastet werden, was zu einer vorteilhaften Verteilung der auf die Hebeeinheit wirkenden Gewichtskräfte führt. Zudem wird durch eine entsprechende Erhöhung der Kontaktstellen mit dem anzuhebenden plattenförmigen Objekt eine stabilere und sicherere Lagerung des plattenförmigen Objektes in der durch die Auflageflächen ausgebildeten Auflageebene bei geringerer Beanspruchung des plattenförmigen Objektes möglich.

Bei einer anderen bevorzugten Ausführungsform des erfindungsgemäßen Beladesystems ist das zwischen den zumindest zwei Auflageelementen verlaufende Fördermittel am Fördergestell befestigt.

Dadurch wird eine stabile Lagerung des Fördermittels an dem Fördergestell ermöglicht. Vorzugsweise ist das Fördermittel jeweils in zwei gegenüberliegenden Endabschnitten des Fördergestells an demselben abgestützt; darüber hinaus können auch zwischen den beiden Endabschnitten Stützstellen, beispielsweise in Form von Querstreben des Fördergestells, vorgesehen sein, um das Fördermittel noch stabiler zu lagern.

Bei einer weiteren bevorzugten Ausführungsform des erfindungsgemäßen Beladesystems ist ein Zustelltisch vorgesehen, welcher dazu ausgelegt ist, die plattenförmigen Objekte mittels Zustellfördermittel in zumindest zwei zueinander rechtwinkelig verlaufenden Richtungen linear zu bewegen und mittels Zustelldrehmittel zu drehen, wobei die Zustellfördermittel dazu ausgelegt sind, die plattenförmigen Objekte auf zumindest ein Fördermittel des Fördergestells zu übergeben.

Mittels dieses Zustelltisches können plattenförmige Objekte in beliebiger Position und Orientierung den Fördermitteln des Fördergestells übergeben werden. Dadurch kann eine beliebige, vorgegebene Vernetzung des Fördergestells, also eine beliebige, vorgegebene Anordnung einer bestimmten Menge an plattenförmigen Objekten auf dem Fördergestell, realisiert werden.

Das erfindungsgemäße Beladesystem kann nicht nur zum Beladen eines Härteofens, sondern auch zum Beladen anderer Bearbeitungsstationen in beliebigen Fertigungslinien verwendet werden. Selbstverständlich kann ein in Fertigungsrichtung hinter der jeweiligen Bearbeitungsstation angeordnetes Beladesystem auch zur Entladung und zum Weitertransport der, vorzugsweise plattenförmigen, Objekte verwendet werden.

In einer weiteren Ausführung des Beladesystems gemäß der Erfindung kann die Hebeeinheit umfassen:
- einen Führungsrahmen, welcher zumindest zwei Befestigungsschenkel aufweist, zur, vorzugsweise lösbaren, Befestigung an einer Tragestruktur eines Fördermittels,
- zumindest ein Schieberelement, welches am oder im Führungsrahmen beweglich, vorzugsweise linear verschiebbar, gehalten ist,
- zumindest ein Auflageelement für ein plattenförmiges Objekt, insbesondere eine Glasplatte, welches Auflageelement am Schieberelement angeordnet ist, sowie
- einen am Führungsrahmen angeordneten Antrieb, der in Wirkverbindung mit dem zumindest einen Schieberelement steht, um diesen am bzw. im Führungsrahmen zu bewegen, vorzugsweise linear zu verschieben.

Im Rahmen der Erfindung ist die Hebeeinheit grundsätzlich mit einem beliebigen Fördergestell verbindbar. Insbesondere kann die Hebeeinheit beispielsweise mittels der Befestigungsschenkel des Führungsrahmens an einem Fördermittel des Fördergestells, insbesondere an der Trägerstruktur des jeweiligen Fördermittels, angebracht werden. Gleichzeitig dient der Führungsrahmen der Hebeeinheit aber auch zur Führung des zumindest einen Schieberelementes, wobei das Schieberelement im oder am Führungsrahmen verschiebbar gehalten ist und zumindest ein Auflageelement zur Kontaktierung des vorzugsweise plattenförmigen Objektes aufweist.

Denkbar sind etwa Ausführungsformen der Hebeeinheit, in denen jeweils ein Schieberelement vorgesehen ist, welches Schieberelement ein oder mehrere, vorzugsweise zwei einander gegenüberliegende, Auflageelemente umfasst. Dabei kann das eine Schieberelement an dem Führungsrahmen anliegen und somit an dem Führungsrahmen beweglich gelagert sein, oder aber zwischen zwei Rahmenelementen des Führungsrahmens angeordnet sein, sodass das Schieberelement im Führungsrahmen verschiebbar ist. Denkbar sind darüber hinaus auch Ausführungsformen mit zwei Schieberelementen, die jeweils ein Auflageelement aufweisen und beidseits des Führungsrahmens an diesem anliegen, sodass beide Schieberelemente an dem Führungsrahmen verschiebbar gelagert sind; alternativ können die beiden Schieberelemente auch an einem zentralen Rahmenelement des Führungsrahmens anliegen und jeweils von einem äußeren Rahmenelement des Führungsrahmens umgeben sein, sodass die beiden Schieberelemente jeweils in einem eigenen Führungsabschnitt des Führungsrahmens beweglich gehalten sind. Das Auflageelement des einen Schieberelementes muss dabei nicht zwingend dem Auflageelement des anderen Schieberelementes gegenüber liegen; vorzugsweise sind die Auflageelemente versetzt angeordnet. So können Objekte stabiler auf den Auflageelementen gelagert werden.

Um die Auflageelemente anzuheben bzw. die durch die Auflageelemente aufgespannte Auflagefläche aus der Position unterhalb der Förderebene in eine Position oberhalb der Förderebene zu bewegen, sodass ein oberhalb der Hebeeinheit befindliches Objekt von der Förderebene abgehoben wird, umfasst die Hebeeinheit den mit dem jeweiligen Schieberelement gekoppelten Antrieb. Bei Ausführungsformen mit mehreren Schieberelementen kann der Antrieb der Hebeeinheit mit sämtlichen Schieberelementen gekoppelt sein; alternativ können mehrere separate Antriebe vorgesehen sein, die jeweils mit einem der Schieberelemente gekoppelt sind.

Da der Antrieb mit dem Führungsrahmen verbunden ist, stellt die Hebeeinheit eine autonome Einheit dar, mit der existierende Fördergestelle und dergleichen auch nachträglich noch ausgerüstet werden können. Zudem ist ein einfacher Austausch defekter Hebeeinheiten möglich, da hierfür lediglich die defekte Hebeeinheit ersetzt werden muss; andere, ordnungsgemäß funktionierende Hebeeinheiten können bei diesem Vorgang hingegen ungestört weiterbetrieben werden.

Besonders vorteilhaft umfasst der Führungsrahmen zumindest zwei einander gegenüberliegende Befestigungsschenkel. Dabei können Abschnitte der Befestigungsschenkel entweder unmittelbar oder auch über eine am Führungsrahmen befestigte Basisplatte mit dem Antrieb verbunden sein, während andere Abschnitte der Befestigungsschenkel Mittel zur Befestigung der Hebeeinheit an einem Fördermittel eines Fördergestells bzw. an einem Fördergestell aufweisen. Diese Mittel zur Befestigung können an einander zugewandten Außenflächen der gegenüberliegenden Befestigungsschenkel angeordnet und vorzugsweise als Rastnuten und/oder Rastnasen ausgebildet sein. Vorzugsweise können die Befestigungsschenkel jeweils einen vertikalen Abschnitt zur Befestigung der Hebeeinheit an dem Fördergestell, sowie einen horizontalen Abschnitt zur Verbindung des Antriebs mit dem Führungsrahmen aufweisen. Dabei kann die Basisplatte durch die horizontalen Abschnitte der gegenüberliegenden Befestigungsschenkel ausgebildet sein.

Bei Ausführungsformen, bei denen das Schieberelement an dem Führungsrahmen geführt ist, liegt das Schieberelement an den beiden gegenüberliegenden Befestigungsschenkeln an. Bei Ausführungsformen, bei denen das Schieberelement in dem Führungsrahmen verschiebbar gehalten ist, kann der Führungsrahmen mehr als zwei Befestigungsschenkel umfassen, die einander jeweils paarweise gegenüberliegen. Insbesondere kann das Schieberelement zwischen zwei Paaren von jeweils zwei einander gegenüberliegenden Befestigungsschenkeln angeordnet sein, sodass das Schieberelement beidseits an jeweils einem Paar von Befestigungsschenkeln anliegt.

Besonders bevorzugt sind jeweils zwei einander gegenüberliegende Befestigungsschenkel über den Antrieb miteinander verbunden. Alternativ oder zusätzlich können die beiden Befestigungsschenkel mittels eines Fixierelementes, etwa einer Stellschraube, miteinander verbunden sein, um den Abstand zwischen zumindest jenen Abschnitten der Befestigungsschenkel einstellen zu können, welche Abschnitte die Mittel zur Befestigung der Hebeeinheit an dem Fördergestell aufweisen.

Eine Aufgabe der vorliegenden Erfindung wird durch ein Verfahren zum Beladen eines von einem erfindungsgemäßen Beladesystem bereitgestellten Fördergestells mit, vorzugsweise plattenförmigen, Objekten, insbesondere mit Glasplatten, gelöst, welches Verfahren die folgenden Schritte umfasst:
- Auflegen/Befördern eines ersten plattenförmigen Objektes auf eine durch mehrere, am Fördergestell angeordnete, Fördermittel ausgebildete Förderebene;
- Fördern des ersten plattenförmigen Objektes durch eines oder mehrere der Fördermittel in eine erste Förderposition;
- Abheben des ersten plattenförmigen Objektes an seiner ersten Förderposition durch an einem oder an mehreren der Fördermittel angeordnete Hebeeinheiten von der Förderebene;
- Auflegen/Befördern eines zweiten plattenförmigen Objektes auf die Förderebene;
- Fördern des zweiten plattenförmigen Objektes durch eines oder mehrere der selben Fördermittel in eine zweite Förderposition, wobei durch Betätigung des einen oder der mehreren Fördermittel die abgehobene Position des ersten plattenförmigen Objektes an seiner ersten Förderposition nicht verändert wird;
- Absenken des ersten plattenförmigen Objektes auf die Förderebene an seiner ersten Förderposition.

Das erfindungsgemäße Verfahren hat den großen Vorteil, dass Fördermittel, auf denen bereits eines der, vorzugsweise plattenförmigen, Objekte, mit denen das Fördergestell beladen werden soll, angeordnet ist bzw. aufliegt, auch weiterhin zur Positionierung anderer Objekte auf dem Fördergestell benutzt werden können, ohne dadurch die Position anderer Objekte zu verändern, die sich bereits an deren vorbestimmter Position auf dem Fördergestell befinden. Dies wird erfindungsgemäß dadurch erreicht, dass jene Objekte, deren aktuelle Position auf dem Fördergestell nicht mehr verändert werden soll, angehoben werden, sodass sich diese nicht mehr in Eingriff mit den jeweiligen Fördermitteln befinden.

Konkret sieht das erfindungsgemäße Verfahren zunächst vor, dass ein erstes, vorzugsweise plattenförmiges, Objekt auf eine Förderebene, welche durch mehrere, am Fördergestell angeordnete Fördermittel ausgebildet ist, aufgelegt bzw. befördert wird. Dabei können an einem Fördergestell durchaus mehrere Förderebenen ausgebildet sein, nämlich durch Fördermittel, die in unterschiedlichen Ebenen angeordnet sind.

Sobald sich das erste Objekt auf dem oder den Fördermitteln befindet und somit in der Förderebene angeordnet ist, welche dem oder den jeweiligen Fördermitteln zugeordnet ist, führt eine Betätigung der Fördermittel dazu, dass das erste Objekt durch die Fördermittel gefördert wird. Sobald das Objekt in die erste Förderposition gefördert wurde, hat das Objekt seine ihm vorbestimmte Position auf dem Fördergestell erreicht und werden die Fördermittel, mittels derer das Objekt an seine erste Förderposition gefördert wurde, abgeschaltet.

Würde nun das zweite, vorzugsweise plattenförmige, Objekt ebenfalls mit den selben Fördermitteln zu der ihm vorbestimmten Position auf dem Fördergestell, beispielsweise einer zweiten Förderposition, gefördert, auf denen auch das erste Objekt aufliegt, so würde dabei unweigerlich auch das erste Objekt weitergefördert und somit aus der ersten Förderposition hinaus bewegt werden.

Erfindungsgemäß ist es aber nun vorgesehen, das erste Objekt, das sich in der ersten Förderposition befindet, von den Fördermitteln abzuheben. Dadurch wird der Eingriff zwischen den Fördermitteln einerseits und dem erstem Objekt andererseits gelöst, sodass die Betätigung des Fördermittels die aktuelle Position des ersten Objektes, welches nun nicht mehr auf der Förderebene sondern auf der durch die Auflageelemente der Hebeeinheit(en) ausgebildeten Auflageebene gelagert ist, nicht mehr zu verändern vermag. Vorzugsweise greifen die Auflageelemente der Hebeeinheiten des Fördergestells dabei von unten - also von der Seite der Fördermittel - an die auf der Förderebene aufliegende Außenfläche des ersten Objektes an. Insbesondere können weitere Objekte, wie etwa das zweite, vorzugsweise plattenförmige, Objekt, mittels der Fördermittel in die jeweils vorbestimmten Positionen gefördert werden.

Erfindungsgemäß geschieht das Fördern des zweiten plattenförmigen Objektes durch eines oder mehrere der Fördermittel in eine zweite Förderposition nach dem Auflegen/Befördern des zweiten plattenförmigen Objektes auf die Förderebene und vor dem Absenken des ersten plattenförmigen Objektes auf die Förderebene.

Dadurch kann das zweite Objekt mittels der Fördermittel in die zweite Förderposition bewegt werden, ohne dadurch die Position des ersten Objektes zu beeinflussen. Dies ist nicht mehr nur in solchen Fällen möglich, in denen das zweite Objekt und das erste Objekt jeweils mittels unterschiedlicher Fördermittel, beispielsweise mittels nebeneinanderliegender Förderbänder, in ihre vorbestimmten, beispielsweise in nebeneinanderliegende, Positionen auf dem Fördergestell gebracht werden sollen, sondern auch dann, wenn die Objekte mittels der selben Fördermittel in ihre vorbestimmten, beispielsweise hintereinander liegende, Positionen auf dem Fördergestell gebracht werden sollen.

Finden sich alle Objekte auf der ihnen vorbestimmten Position auf dem Fördergestell, so können diese gemeinsam zu einer nachgeschalteten Bearbeitungsstation, etwa in einen Härteofen weitergefördert werden.

Dazu können gemäß einer bevorzugten Ausführungsform des Verfahrens das erste und das zweite plattenförmige Objekt durch eines oder mehrere der Fördermittel nach dem Absenken des ersten plattenförmigen Objektes auf die Förderebene gemeinsam weiterbefördert werden.

Somit kann die auf dem Fördergestell erfolgte Anordnung der, vorzugsweise plattenförmigen, Objekte ohne Veränderung der relativen Positionen der einzelnen Objekte zueinander in die nachgeschaltete Bearbeitungsstation überführt werden.

In analoger Weise können mehrere Objekte nacheinander mittels der Fördermittel in die ihnen vorbestimmte Position auf dem Fördergestell gebracht werden, indem sämtliche Objekte, die bereits in der ihnen vorbestimmten Position auf dem Fördergestell angeordnet sind, mittels der Hebeeinheiten angehoben werden, während jene Fördermittel, welche die Förderebenen ausbilden, auf denen sich diese Objekte befinden, zum Fördern weiterer Objekte verwendet werden.

Insbesondere kann das erfindungsgemäße Verfahren folgende weitere Schritte umfassen:
- Abheben des ersten und/oder des zweiten plattenförmigen Objektes durch an einem oder an mehreren der Fördermittel angeordnete Hebeeinheiten von der Förderebene;
- Auflegen/Befördern eines dritten plattenförmigen Objektes (4c) auf die Förderebene;
- Absenken des ersten und des zweiten plattenförmigen Objektes auf die Förderebene.

Dabei kann vorzugsweise das Fördern des dritten plattenförmigen Objektes durch eines oder mehrere der Fördermittel in eine dritte Förderposition nach dem Auflegen/Befördern des dritten plattenförmigen Objektes auf die Förderebene und vor dem Absenken des ersten und des zweiten plattenförmigen Objektes auf die Förderebene geschehen.

Besonders bevorzugt können das erste, das zweite und das dritte plattenförmige Objekt durch eines oder mehrere der Fördermittel nach dem Absenken des ersten und des zweiten plattenförmigen Objektes auf die Förderebene gemeinsam weiterbefördert werden.

Vorzugsweise handelt es sich bei den plattenförmigen Objekten um Glasplatten.

Nach Positionierung aller Objekte auf dem Fördergestell können sämtliche Objekte gemeinsam weitergefördert werden, ohne dabei die relative Position der einzelnen Objekte untereinander zu verändern. Hierfür werden sämtliche Objekte mittels der Hebeeinheiten wieder auf die Förderebene abgesenkt und durch Betätigung der Fördermittel weitergefördert.

Besonders bevorzugt wird das erste und/oder das zweite und/oder das dritte plattenförmige Objekt mittels eines oder mehrerer der Fördermittel in einen Härteoffen gefördert.

### KURZE BESCHREIBUNG DER FIGUREN

Die Erfindung wird nachfolgend anhand von Beispielen und Zeichnungen, die nur beispielhaft sind und den Erfindungsgedanken darlegen, aber keineswegs einschränken oder gar abschließend wiedergeben, näher erläutert, wobei:
- Fig. 1: Fördermittel eines Fördergestells mit erfindungsgemäßen Hebeeinheiten
- Fig. 2: eine Detailansicht der Fig. 1
- Fig. 3: ein Ausführungsbeispiel des erfindungsgemäßen Beladesystems umfassend ein Fördergestell sowie einen Zustelltisch
- Fig. 4: ein Ausführungsbeispiel einer an einem Fördermittel befestigten Hebeeinheit
- Fig. 5: die Hebeeinheit aus Fig. 4 in perspektivischer Ansicht
- Fig. 6: die Hebeeinheit aus Fig. 4 und 5 in einer Aufsicht
- Fig. 7: ein Ausführungsbeispiel einer an einem Fördermittel befestigten Hebeeinheit in perspektivischer Ansicht
- Fig. 8: eine Schnittansicht der Fig. 7
- Fig. 9: eine schematische Darstellung eines Fördergestells mit drei Förderpositionen
- Fig. 10: eine schematische Darstellung des erfindungsgemäßen Verfahrens
- Fig. 11: eine schematische Darstellung einer Fertigungslinie

### WEGE ZUR AUSFÜHRUNG DER ERFINDUNG

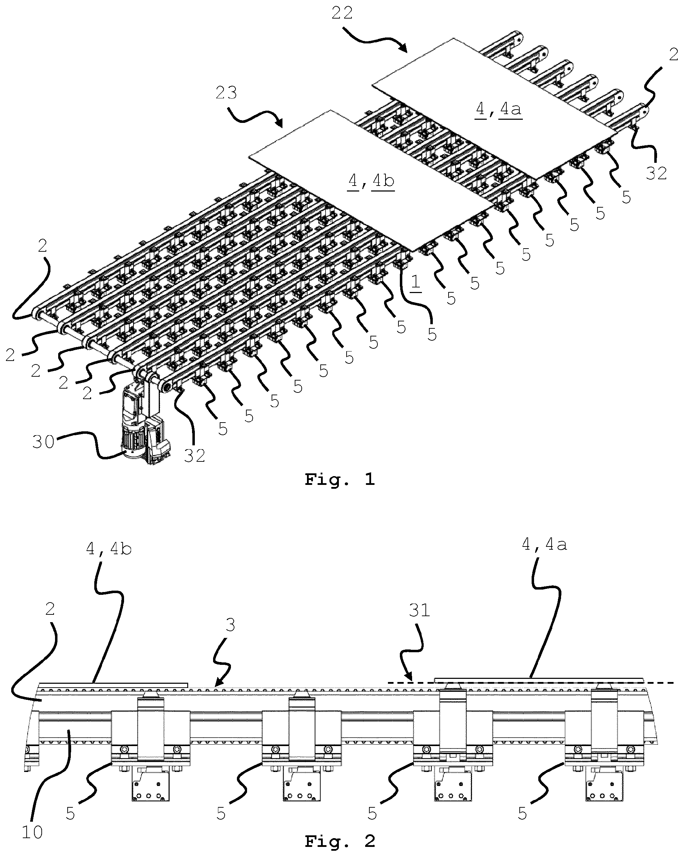

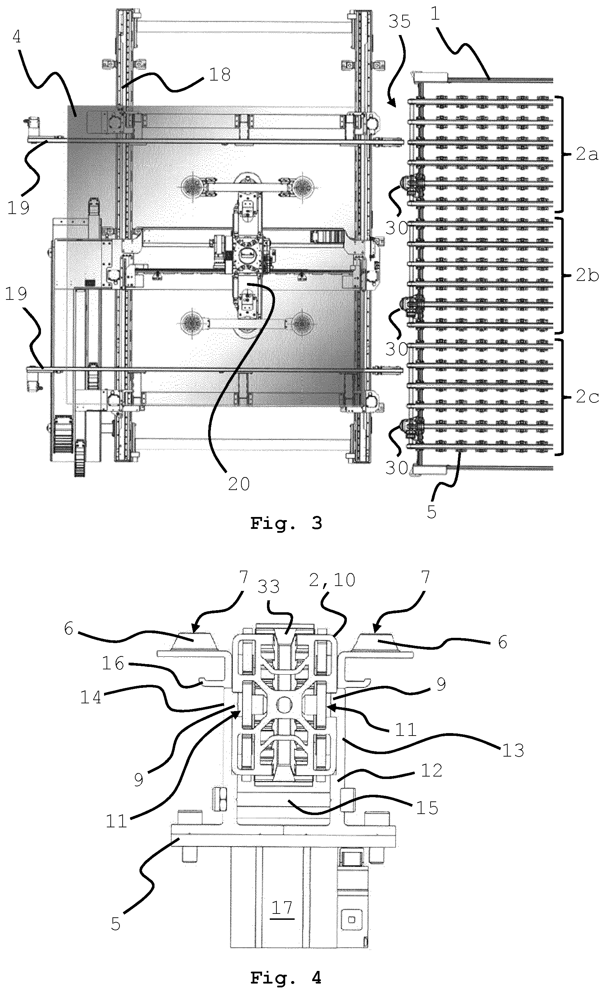

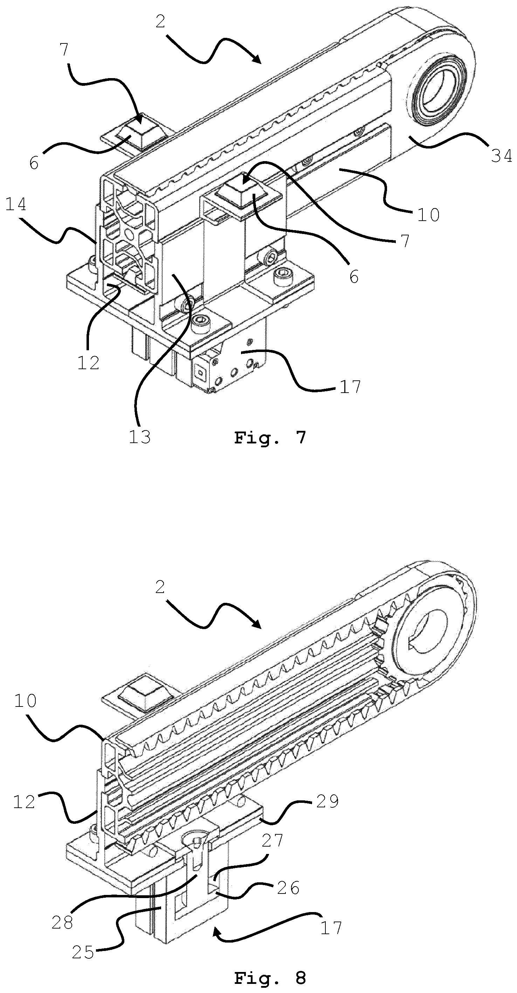

Fig. 1 zeigt Fördermittel 2 eines Fördergestells 1 (in Fig. 1 nicht dargestellt, siehe Fig. 3), wobei die Fördermittel 2 eine Gruppe von sechs Riemenförderern umfassen. Jeder Riemenförderer umfasst dabei einen Riemen 33, welcher in einer Tragestruktur 10 (Fig. 2) des Fördermittels 2 und über zwei, in Endabschnitten der Tragestruktur 10 angeordnete Umlenkelemente 34 geführt ist (Fig. 7). Die Führung des Riemens 33 ist auch aus den Figuren 4, 7 und 8 gut ersichtlich.

Erfindungsgemäß sind an den Fördermitteln 2 Hebeeinheiten 5 angebracht; in Fig. 1 sind an jeder Tragestruktur 10 mehrere dieser Hebeeinheiten 5 befestigt. Darüber hinaus umfassen die Fördermittel 2 Abstützelemente 32, mittels derer die Fördermittel 2 auf dem Fördergestell 1 gelagert und befestigt sind. Im gezeigten Ausführungsbeispiel sind die Fördermittel 2 mittels eines gemeinsamen Antriebsmittels in Form eines Motors 30 als Gruppe der Riemenförderer gemeinsam antreibbar.

Auf den Fördermitteln 2 bzw. auf den Hebeeinheiten 5 liegen plattenförmige Objekte 4 in Form eines ersten, als Glasscheibe ausgebildeten Objektes 4a sowie eines zweiten, ebenfalls als Glasscheibe ausgebildeten Objektes 4b auf. Die Funktionsweise der Erfindung kann anhand von Fig. 2, welche eine Detailansicht von Fig. 1 zeigt, anschaulich erläutern:
Objekte 4, die auf den Fördermitteln 2 aufliegen - sich also in einer durch die Fördermittel 2 aufgespannten Förderebene 3 befinden - werden, sobald die Fördermittel 2 betätigt werden, entsprechend der Bewegung der Fördermittel 2 bewegt bzw. gefördert. Um nun mehrere Objekte 4 mittels der selben Fördermittel 2 in hintereinander liegende Positionen zu fördern, beispielsweise in eine erste Förderposition 22 und in eine in Förderrichtung 38 betrachtet vor der ersten Förderposition 22 liegende zweite Förderposition 23 (siehe Fig. 1), müssten die Objekte 4 bereits in einer entsprechenden Relativposition zueinander auf die Fördermittel 2 aufgebracht werden. Ist dies nicht der Fall, wird also zunächst das erste Objekt 4a in die erste Förderposition 22 gefördert und soll erst zu einem späteren Zeitpunkt - beispielsweise nach dem Positionieren weiterer Objekte auf dem Fördergestell 1 - das zweite Objekt 4b in die zweite Förderposition 23 gefördert werden, hätte dies unweigerlich die Konsequenz, dass auch die Position des ersten Objektes 4a aufgrund der Bewegung der Fördermittel 2 verändert werden würde. Insbesondere könnte eine Relativposition der beiden Objekte 4a und 4b zueinander allein durch Betätigung der Fördermittel 2 nicht mehr verändert werden.

Um diese Nachteile, die insbesondere dann nicht auftreten dürfen, wenn das Fördergestell 1 automatisiert mit einer vorgegebenen Konfiguration an Objekten 4 beladen werden soll, zu vermeiden, ist es erfindungsgemäß vorgesehen, dass ein Objekt 4, das sich in einer vorbestimmten Position befindet, angehoben bzw. von der Förderebene 3 abgehoben wird, wenn ein weiteres Objekt 4 mittels des selben Fördermittels 2 zu dessen vorbestimmter Position gefördert werden soll bzw. wird. Wie aus Fig. 2 ersichtlich, liegt das erste Objekt 4a, welches sich bereits in der ihm gemäß der vorgegebenen Konfiguration vorbestimmten, ersten Förderposition 22 befindet, nicht mehr auf der Förderebene 3 auf, sondern wurde mittels der Hebeeinheiten 5 von der Förderebene 3 abgehoben. Das erste Objekt 4a befindet sich demnach in einer Auflageebene 31, welche Auflageebene 31 durch Auflageflächen 7 von Auflageelementen 6 (Fig. 4) der jeweiligen Hebeeinheiten 5 aufgespannt wird und welche Auflageebene 31 in Höhenrichtung betrachtet oberhalb der Förderebene 3 liegt.

Somit befindet sich das erste Objekt 4a nicht mehr im Eingriff mit dem Fördermittel 2, welches Fördermittel 2 somit problemlos zum Fördern des zweiten Objektes 4b betätigt werden kann, ohne dass dadurch die Position des ersten Objektes 4a auf dem Fördergestell 1 (in horizontaler Richtung) verändert wird. Die Bewegung des Fördermittels 2 hat somit nicht mehr die Bewegung des ersten Objektes 4a zur Folge.

Sobald sich das zweite Objekt 4b in der ihm vorbestimmten zweiten Förderposition 23 befindet und das Fördermittel 2 nicht mehr betätigt, also ausgeschaltet, wird, kann das erste Objekt 4a wieder abgesenkt werden. Dies geschieht erfindungsgemäß dadurch, dass die Auflageelemente 6 der jeweiligen Hebeeinheiten 5 entgegen der Höhenrichtung so weit abgesenkt werden, dass sich die Auflageflächen 7 unterhalb der Förderebene 3 befinden. In diesem Sinne sind die Auflageelemente 6 der Hebeeinheiten 5 - bezogen auf deren Auflageflächen 7 - aus einer Position unterhalb der Förderebene 3 (welche Position die Auflageflächen der beiden linken Hebeeinheiten 5 in Fig. 2 einnehmen) in eine Position oberhalb der Förderebene 3 (welche Position die Auflageflächen der beiden rechten Hebeeinheiten 5 in Fig. 2 einnehmen) bewegbar. Als besonders vorteilhaft stellt sich dabei heraus, dass die Objekte 4 nicht - wie im Stand der Technik - an ihrer oftmals hochsensiblen oberen Außenfläche, sondern an ihrer weniger anfälligen unteren Außenfläche, mit welcher die Objekte 4 zwecks Förderung auf dem Fördergestell 1 auch auf den Fördermitteln 2 aufliegen, kontaktiert werden.

Um die Objekte 4 einer bestimmten Anzahl an Objekten 4 gemäß einer bestimmten Konfiguration, welche Konfiguration die exakte Positionierung und Orientierung jedes Objektes 4 auf dem Fördergestell 1 festlegt, auf dem Fördergestell 1 anzuordnen, müssen die Objekte 4 zunächst an einen Einlauf 35 des Fördergestells 1, welcher Einlauf 35 durch einen stirnseitigen Endbereich des Fördergestells 1 ausgebildet sein kann, übergeben werden. Hierzu kann ein in Fig. 3 dargestellter Zustelltisch 18 vorgesehen sein, welcher Zustelltisch 18 in Förderrichtung 38 der Fördermittel 2 dem Fördergestell 1 vorgelagert ist. Ausführungsformen eines derartigen Zustelltisches 18 sind bereist aus WO 2018/019818 A1 (veröffentlicht am 1. Februar 2018) oder aus AT 15710 U1 (veröffentlicht am 15. April 2018) bekannt; auf die Offenbarungen dieser Veröffentlichungen wird in dieser Hinsicht Bezug genommen und deren Inhalt wird hiermit in diese Anmeldung aufgenommen.

Der Zustelltisch 18 umfasst dabei Zustellfördermittel 19 zum Fördern von Objekten 4, sowie Zustelldrehmittel 20, um die auf dem Zustelltisch 18 befindlichen Objekte 4 zu drehen. Die Zustellfördermittel 19 können parallel zu den Fördermitteln 2 des Fördergestells 1 verlaufend angeordnet sein, um die auf dem Zustelltisch 18 befindlichen Objekte 4 ebenfalls in Förderrichtung 38 fördern zu können. Die Zustellfördermittel 19 und/oder die Zustelldrehmittel 20 können quer zur Förderrichtung 38 verfahrbar in bzw. auf dem Zustelltisch 18 angeordnet sein. Dadurch können Objekte 4 mittels des Zustelltisches 18 in jeder beliebigen Orientierung sowie an jeder beliebigen Position an den Einlauf 35 des Fördergestells 1 übergeben werden. Insbesondere wird es möglich, Objekte 4 gezielt auf eine bestimmte Förderebene 3 des Fördergestells 1 aufzubringen; beispielsweise wird es möglich, ein Objekt 4 ausschließlich auf die durch eine erste Gruppe 2a von Fördermitteln 2 aufgespannte Förderebene 3 aufzubringen, sodass zum Fördern des Objektes 4 auf dem Fördergestell 1 lediglich diese Gruppe 2a von Fördermitteln 2 betätigt werden muss, während sämtliche andere Fördermittel 2 des Fördergestells 1, etwa die einer zweiten Gruppe 2b und einer dritten Gruppe 2c von Fördermitteln 2, abgeschaltet bleiben oder zum Fördern anderer Objekte 4 asynchron betrieben werden können. Die den einzelnen Gruppen 2a, 2b, 2c von Fördermitteln 2 zugeordneten Förderebenen 3 können in einer gemeinsamen Ebene oder aber in verschiedenen Ebenen liegen. Jeder der Gruppen 2a, 2b, 2c ist ein eigener Motor 30 zugeordnet, um die jeweiligen Fördermittel 2 getrennt voneinander antreiben zu können.

Erfindungswesentlich ist jedenfalls die zumindest eine Hebeeinheit 5, die das Anheben einzelner Objekte 4 von der jeweiligen Förderebene 3 vermittelt. In den Ausführungsbeispielen gemäß Figuren 1, 2 und 3 sind jeweils mehrere Hebeeinheiten 5 an den Fördermitteln 2 angeordnet; diese Hebeeinheiten 5 und deren Befestigung an den Fördermitteln 2 wird im Folgenden anhand der Figuren 4, 5, 6, 7 und 8 näher erläutert. Es sei aber darauf hingewiesen, dass grundsätzlich verschiedenste Ausführungsformen der zumindest einen Hebeeinheit denkbar sind; beispielsweise könnte lediglich eine einzige Hebeeinheit vorgesehen sein, die mit mehreren, getrennt voneinander ansteuerbaren und über das Fördergestell 1 verteilten Auflageelementen versehen ist, um die auf dem Fördergestell 1 angeordneten Objekte 4 individuell von der jeweiligen Förderebene 3 abzuheben.

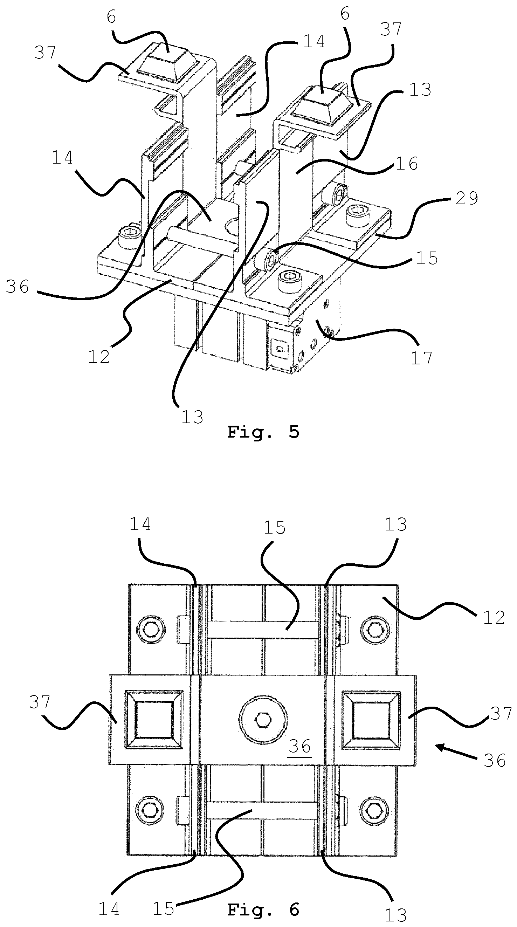

Fig. 5 und 6 zeigen die nun näher zu erläuternde Hebeeinheit 5 als separates Modul, während Fig. 4, 7 und 8 die Hebeeinheit 5 in einem mit dem Fördermittel 2 verbundenen Zustand zweigt.

Die Hebeeinheit 5 umfasst einen Führungsrahmen 12, in oder an welchem ein Schieberelement 16 in Höhenrichtung verschiebbar gehalten ist. Weiters umfasst die Hebeeinheit 5 einen Antrieb 17, welcher Antrieb 17 mit dem Schieberelement 16 in Wirkverbindung steht und welcher Antrieb 17 (direkt oder indirekt) mit dem Führungsrahmen 12 verbunden ist.

Der Führungsrahmen 12 der Hebeeinheit 5 umfasst im gezeigten Ausführungsbeispiel zu beiden Seiten des Schieberelementes 16 jeweils einen ersten Befestigungsschenkel 13 und einen zweiten Befestigungsschenkel 14, die sich paarweise gegenüber liegen. Über ein Fixierelement 15, welches im gezeigten Ausführungsbeispiel als Stellschraube ausgebildet ist, lässt sich zumindest ein maximaler Abstand zwischen dem ersten Befestigungsschenkel 13 und dem zweiten Befestigungsschenkel 14 einstellen, sodass der erste Befestigungsschenkel 13 und der zweite Befestigungsschenkel 14 gegen die Tragestruktur 10 gepresst bzw. an dieser fixiert werden. An einander zugewandten Außenflächen des ersten Befestigungsschenkels 13 und des zweiten Befestigungsschenkels 14 sind nach innen hin abstehende Rastnasen 9 zur Verbindung der Hebeeinheit 5 mit dem Fördermittel 2 bzw. dessen Tragestruktur 10 vorgesehen. Dadurch ist eine schnelle und präzise Montage der Hebeeinheit 5 gewährleistet.

Das Schieberelement 16 ist, wie insbesondere aus Fig. 5 ersichtlich, näherungsweise U-förmig ausgebildet, wobei zwei vertikale Abschnitte des Schieberelementes 16 an einem Ende mittels eines Horizontalabschnittes 36 miteinander verbunden sind. Am anderen Ende eines jeden der beiden vertikalen Abschnitte schließt jeweils ein im Wesentlichen horizontal verlaufender Auflageabschnitt 37 an, in welchem jeweils ein Auflageelement 6 angeordnet ist. Über den Horizontalabschnitt 36 ist das Schieberelement 16 mit dem Antrieb 17 verbunden, dessen Aufbau insbesondere auf Fig. 8 ersichtlich ist.

Demnach umfasst der Antrieb 17 eine Kolben-Zylinder-Einheit 25, welche beispielsweise an einer Basisplatte 29 des Führungsrahmens 12 befestigt ist. Insbesondere können erste Befestigungsschenkel 13 und zweite Befestigungsschenkel 14 des Führungsrahmens 12 mit dieser Basisplatte 29 verschraubt sein (Fig. 5, 8).

Um das Schieberelement 16 in Höhenrichtung zu verschieben, sodass die Auflageflächen 7 der Auflageelemente 6 aus einer Position unterhalb der Förderebene 3 in eine Position oberhalb der Förderebene 3 gebracht werden kann, ist ein in einem Zylinder 27 beweglich gehaltener Kolben 26 über einen Stößel 28 mit dem Schieberelement 16 verbunden. Beispielsweise kann das Schieberelement 16 mit dem Stößel 28 über eine Ausnehmung im Horizontalabschnitt 36 verschraubt sein. Die Kolben-Zylinder-Einheit 25 kann hydraulisch, pneumatisch oder auch elektromechanisch betätigbar sein, um das Schieberelement 16 in Höhenrichtung zu verschieben; ein Absenken des Schieberelementes 16 entgegen der Höhenrichtung kann beispielsweise unter Ausnützung des Eigengewichtes des auf den Auflageelementen 6 aufliegenden Objektes 4 erreicht werden.

Um die Hebeeinheit 5 auf zuverlässige Weise an dem jeweiligen Fördermittel 2 zu befestigen, kann die Hebeeinheit 5, wie dies anhand der Fig. 4, 7 und 8 erkennbar ist, mittels des Führungsrahmens 12 mittels Klick- oder Rastverbindung mit der Tragestruktur 10 verbunden sein. Hierzu wird die Hebeeinheit 5 derart an die Tragestruktur 10 angesetzt, dass die an dem ersten Befestigungsschenkel 13 und dem zweiten Befestigungsschenkel 14 angeordneten Rastnasen 9 jeweils in eine korrespondierende Rastnut 11 der Tragestruktur 10 eingreifen. Zusätzlich oder alternativ dazu können Rastnasen der Tragestrukturen 10 in Rastnuten der Führungsrahmen 12 eingreifen. Um die Hebeeinheit 5 gegen Loslösen von der Tragestruktur 10 zu sichern, kann der Abstand zwischen dem ersten Befestigungsschenkel 13 und dem zweiten Befestigungsschenkel 14 mittels des Fixierelementes 15 verringert werden, sodass sich zwischen Führungsrahmen 12 und Tragestruktur 10 sowohl ein Formschluss als auch ein Kraftschluss ausbildet. Diese Verbindung zwischen Führungsrahmen 12 und Tragestruktur 10 dient dazu, um eventuell defekte Antriebe 17 im Bedarfsfall schnell wechseln zu können.

Wie aus Fig. 7 gut erkennbar ist, dient die Rastnut 11 der Tragestruktur 10 nicht nur der Befestigung der Hebeeinheiten 5, sondern auch der Befestigung der die Tragestruktur 10 endseitig abschließenden Umlenkelemente 37. Dementsprechend kann die Tragestruktur 10 annäherungsweise X-förmig ausgebildet sein, wobei längs der Tragestruktur 10 verlaufende Ausnehmungen an vertikalen Seitenflächen der Tragestruktur 10 die Rastnuten 11 ausbilden, und längs der Tragestruktur 10 verlaufende Ausnehmungen an horizontalen Seitenflächen der Tragestruktur 10 zur Führung des Riemens 33 dienen.

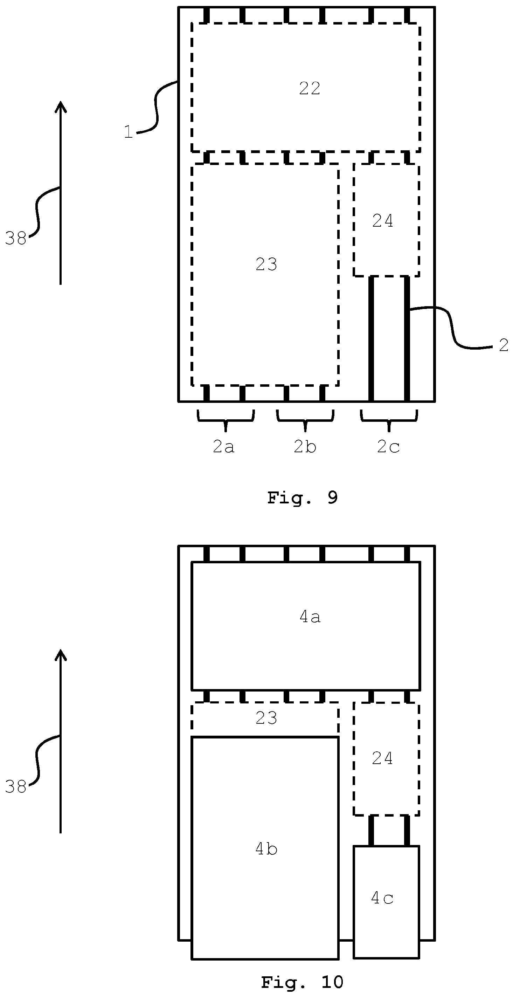

Anhand von Fig. 9 und 10 wird nun das erfindungsgemäße Verfahren bei der Beladung eines Fördergestells 1 mit einem ersten Objekt 4a, einem zweiten Objekt 4b und einem dritten Objekt 4c erläutert:
Fig. 9 zeigt ein Fördergestell 1, auf welchem gemäß einer vorgegebenen Konfiguration drei vorzugsweise plattenförmige Objekte 4 angeordnet werden sollen, nämlich ein erstes Objekt 4a, welches eine erste Förderposition 22 einnehmen soll, ein zweites Objekt 4b, welches eine zweite Förderposition 23 einnehmen soll, und ein drittes Objekt 4c, welches eine dritte Förderposition 24 einnehmen soll. Dabei umfasst das Fördergestell 1 insgesamt 6 Fördermittel 2, die jeweils als Riemenförderer ausgebildet und in Gruppen von jeweils zwei Fördermitteln 2 separat ansteuer- bzw. regelbar und antreibbar sind, nämlich in Form einer ersten Gruppe 2a, einer zweiten Gruppe 2b und einer dritte Gruppe 2c. Selbstverständlich kann die Anzahl der Fördermittel 2 je Gruppe und die Anzahl der Gruppen je Fördergestell bei anderen Ausführungsformen beliebig variiert werden. Das Fördergestell 1 umfasst zudem Hebeeinheiten 5, die an den Fördermitteln 2 angebracht sind, aber in Fig. 9 und 10 nicht dargestellt sind.

Erfindungsgemäß wird nun zunächst das erste Objekt 4a in Förderrichtung 38 zu der ersten Förderposition 22 gefördert. Dies erfolgt unter Einsatz sämtlicher Fördermittel 2, also jener der ersten Gruppe 2a, der zweiten Gruppe 2b sowie der dritten Gruppe 2c.

Befindet sich das erste Objekt 4a in der ersten Förderposition 22 (Fig. 10), kann damit begonnen werden, das zweite Objekt 4b zu der zweiten Förderposition 23 zu fördern. Hierfür sind aufgrund der Abmessungen des zweiten Objektes 4b die Fördermittel 2 der ersten Gruppe 2a und die der zweiten Gruppe 2b nötig; die Fördermittel 2 der dritten Gruppe 2c müssen zum Fördern des zweiten Objektes 4b nicht betätigt werden. Um nun also das zweite Objekt 4b in die in Förderrichtung vor der ersten Förderposition 22 liegende zweite Förderposition 23 zu fördern, ist es erfindungsgemäß vorgesehen, dass das erste Objekt 4a (mittels der nicht dargestellten Hebeeinheiten 5) von der durch die Fördermittel 2 aufgespannten Förderebene 3 (Fig. 1) abgehoben wird. Sobald sich das erste Objekt 4a nicht mehr in der Förderebene 3 sondern der durch die Auflageflächen 7 aufgespannten, oberhalb der Förderebene 3 liegenden Auflageebene 31 befindet, können die Fördermittel 2 sämtlicher Gruppen 2a, 2b, 2c betätigt werden, ohne dass sich die Position des ersten Objektes 4a dadurch ändert. Somit kann das zweite Objekt 4b an den Einlauf 35 des Fördergestells 2 (Fig. 3) übergeben und sodann mittels der Fördermittel 2 der ersten Gruppe 2a und der zweiten Gruppe 2b zu der zweiten Förderposition 23 gefördert werden. Erst wenn sich das zweite Objekt 4b an der zweiten Förderposition 23 befindet, kann das erste Objekt 4a wieder auf die Förderebene 3 abgesenkt werden. Bei Verfahren, in denen zumindest ein weiteres Objekt 4 mittels der Fördermittel 2 der ersten Gruppe 2a und der zweiten Gruppe 2b in eine Förderposition gefördert werden soll, die in Förderrichtung 38 betrachtet vor der zweiten Förderposition 23 liegt, müssen das erste Objekt 4a und das zweite Objekt 4b mittels der Hebeeinheiten 5 von der Förderebene 3 abgehoben werden.

Anschließend oder zeitgleich, jedenfalls aber unabhängig von dem zweiten Objekt 4b, kann das dritte Objekt 4c an die ihm gemäß der vorgegebenen Konfiguration vorbestimmte dritte Förderposition 24 gefördert werden. Hierfür wird das dritte Objekt 4c im Bereich des Einlaufs 35 auf die Förderebene 3 aufgelegt bzw. gefördert, um sodann mittels der Fördermittel 2 der dritten Gruppe 2c an die dritte Förderposition 24 gefördert zu werden. Hierfür ist es wiederum erforderlich und erfindungsgemäß vorgesehen, das erste Objekt 4a von der Förderebene 3 abzuheben. Erst wenn sich das dritte Objekt 4c in der dritten Förderposition 24 befindet, kann das erste Objekt 4a aus der Auflageebene 31 wieder auf die Förderebene 3 abgesenkt werden. Das zweite Objekt 4b muss während des Förderns des dritten Objektes 4c nicht zwingend von der Förderebene 3 abgehoben sein.

Um nun ein weiteres Objekt mittels der Fördermittel 2 der dritten Gruppe 2c in eine in Förderrichtung 38 vor der dritten Förderposition 24 liegende weitere Förderposition zu fördern, müssten sowohl das erste Objekt 4a als auch das zweite Objekt 4b von der Förderebene 3 abgehoben werden, damit die Betätigung der Fördermittel 2 der dritten Gruppe 2c die Positionen des ersten Objektes 4a und des zweiten Objektes 4b nicht mehr verändert.

Grundsätzlich kann jedes zuerst geförderte Objekt, welches seine vorbestimmte Förderposition auf dem Fördergestell erreicht hat, entweder zunächst auf der Förderebene 3 verweilen und erst dann mittels der Hebeeinheiten 5 in die Auflageebene 31 angehoben werden, wenn ein nachfolgend gefördertes Objekt mittels der selben Fördermittel 2, die auch zum Fördern des zuerst geförderten Objektes betätigt wurden, in eine Förderposition gefördert werden soll, welche Förderposition in Förderrichtung betrachtet vor der Förderposition des zuerst geförderten Objektes liegt; erst wenn das nachfolgend geförderte Objekt seine Förderposition erreicht hat, kann das zuerst geförderte Objekt wieder auf die Förderebene abgesenkt werden. Alternativ und bevorzugt ist es aber auch möglich, jedes Objekt mittels der Hebeeinheiten in die Auflageebene anzuheben, sobald dieses Objekt seine Förderposition erreicht hat; ein Absenken der Objekte auf die Förderebene erfolgt in diesem Fall erst, wenn sämtliche Objekte gemäß der vorgegebenen Konfiguration auf dem Fördergestell angeordnet sind und diese gemeinsam, also ohne Veränderung der Relativpositionen zueinander, etwa in den Härteofen weitertranspostiert werden sollen.

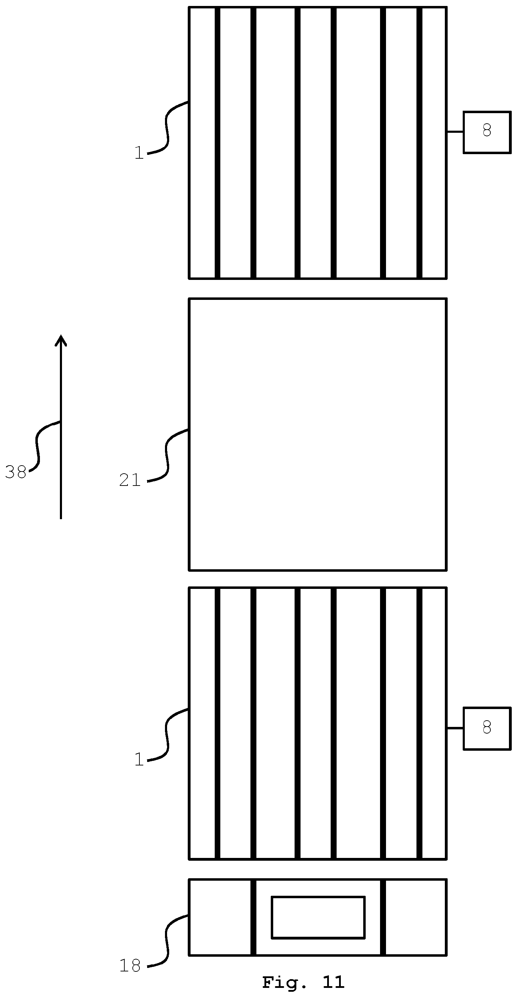

Fig. 11 zeigt eine Fertigungslinie mit insgesamt vier Bearbeitungsstationen. Dabei ist ein Zustelltisch 18 einem ersten erfindungsgemäßen Fördergestell 1 vorgeordnet, gefolgt von einem Härteofen 21, in welchen die auf dem ersten Fördergestell 1 gemäß einer bestimmten Konfiguration angeordneten Objekte 4 (nicht dargestellt) gemeinsam weitergefördert werden, um nach der Härtung gemeinsam aus dem Härteofen 21 auf ein dem Härteofen 21 nachgeschaltetes, zweites erfindungsgemäßes Fördergestell 1 weitergefördert zu werden, wo die Objekte 4 für nachfolgende Bearbeitungsschritte vorbereitet werden können bzw. die auf dem zweiten erfindungsgemäßen Fördergestell 1 angeordneten Objekte 4 in, bezogen auf die Beladung des ersten Fördergestells 1, umgekehrter Reihenfolge wieder vollautomatisch separiert bzw. entladen werden, um anschließend in vereinzelter Objektreihenfolge einem automatischen Ablade-, Abstapel-, oder Fächerwagen-System zugeführt zu werden. Zwischen dem Härteofen 21 und dem zweiten Fördergestell 1 kann auch eine (in Fig. 11 nicht gezeigte) Abkühlstrecke angeordnet sein, auf welcher Abkühlstrecke die in den Härteofen 21 eintransportierten Objekte 4 (Bettbeladung, wie in Fig. 9 und 10 gezeigt) abkühlen können, bevor diese auf das zweite Fördergestell 1 weitertransportiert werden.

Um die Fördermittel 2 und die Hebeeinheiten 5 der Fördergestelle 1 entsprechend der vorgegebenen Konfiguration individuell und/oder in Gruppen zusammengeschlossen ansteuern bzw. regeln zu können, sind Steuer- bzw. Regelvorrichtungen 8 vorgesehen, die in die Fördergestelle 1 integriert oder mit diesen verbunden sein können.

### BEZUGSZEICHENLISTE

- 1: Fördergestell
- 2: Fördermittel
- 2a: erste Gruppe
- 2b: zweite Gruppe
- 2c: dritte Gruppe
- 3: Förderebene
- 4: (plattenförmiges) Objekt
- 4a: erstes (plattenförmiges) Objekt
- 4b: zweites (plattenförmiges) Objekt
- 4c: drittes (plattenförmiges) Objekt
- 5: Hebeeinheit
- 6: Auflageelement
- 7: Auflagefläche
- 8: Steuer- und/oder Regelvorrichtung
- 9: Rastnase
- 10: Tragestruktur
- 11: Rastnut
- 12: Führungsrahmen
- 13: erster Befestigungsschenkel
- 14: zweiter Befestigungsschenkel
- 15: Fixierelement
- 16: Schieberelement
- 17: Antrieb
- 18: Zustelltisch
- 19: Zustellfördermittel
- 20: Zustelldrehmittel
- 21: Härteofen
- 22: erste Förderposition
- 23: zweite Förderposition
- 24: dritte Förderposition
- 25: Kolben-Zylinder-Einheit
- 26: Kolben
- 27: Zylinder
- 28: Stößel
- 29: Basisplatte
- 30: Motor
- 31: Auflageebene
- 32: Abstützelement
- 33: Riemen
- 34: Umlenkelement
- 35: Einlauf
- 36: Horizontalabschnitt
- 37: Auflageabschnitt
- 38: Förderrichtung

## Patentansprüche

1. Beladesystem für plattenförmige Objekte (4), insbesondere für Glasplatten, umfassend ein Fördergestell (1) mit mindestens einer durch mehrere Fördermittel (2) ausgebildeten Förderebene (3) für die plattenförmigen Objekte (4),
wobei
- das Beladesystem Hebeeinheiten (5) aufweist,
- welche Hebeeinheiten (5) unterhalb der mindestens einen Förderebene (3) angeordnet sind, wobei
- die Hebeeinheiten (5) jeweils eine durch zumindest ein Auflageelement (6) ausgebildete Auflagefläche (7) für die plattenförmigen Objekte (4) aufweisen, welche Auflagefläche (7) zwischen einer Position unterhalb der mindestens einen Förderebene (3) und einer Position oberhalb der mindestens einen Förderebene (3) bewegbar ist,
**dadurch gekennzeichnet, dass** eine Steuer- und/oder Regelvorrichtung (8) vorgesehen ist, die dazu eingerichtet ist, die Fördermittel (2) individuell und/oder in Gruppen (2a,2b,2c) zusammengeschlossen anzusteuern und/oder zu regeln, wobei die von der Steuer-/und oder Regelvorrichtung (8) individuell und/oder als Gruppe (2a,2b,2c) angesteuerten und/oder geregelten Fördermittel (2) jeweils mittels eines separaten Antriebsmittels angetrieben sind, und wobei das Beladesystem dazu eingerichtet ist, ein erstes plattenförmiges Objekt (4a) mittels der Fördermittel (2) an eine erste Förderposition (22) auf dem Fördergestell (1) zu fördern sowie mittels der Hebeeinheiten (5) an der ersten Förderposition (22) von den Fördermitteln (2) abzuheben, um weitere plattenförmige Objekte (4b,4c) mittels der selben Fördermittel (2) auf dem Fördergestell (1) in eine jeweilige Förderposition (23, 24) zu bringen, ohne dabei das erste plattenförmige Objekt (4a) zu bewegen.

2. Beladesystem nach Anspruch 1, **dadurch gekennzeichnet, dass** die Fördermittel (2) Riemenförderer, Förderwalzen oder Förderrollen umfassen.

3. Beladesystem nach einem der Ansprüche 1 oder 2, **dadurch gekennzeichnet, dass** eine Steuer- und/oder Regelvorrichtung (8) vorgesehen ist, welche dazu eingerichtet ist, die Hebeeinheiten (5) individuell und/oder in Gruppen zusammengeschlossen anzusteuern und/oder zu regeln.

4. Beladesystem nach einem der Ansprüche 1 bis 3, **dadurch gekennzeichnet, dass** die Hebeeinheiten (5), vorzugsweise lösbar, an den Fördermitteln (2) befestigt sind.

5. Beladesystem nach Anspruch 4, **dadurch gekennzeichnet, dass** die Hebeeinheiten (5) Mittel zur lösbaren Befestigung an einem Fördermittel (2) aufweisen, wobei die Mittel zur lösbaren Befestigung an einem Fördermittel (2) vorzugsweise eine Rastnase (9) und/oder eine Rastnut (11) ist bzw. sind.

6. Beladesystem nach einem der Ansprüche 1 bis 5, **dadurch gekennzeichnet, dass** das oder die Fördermittel (2) eine vorzugsweise profilartig ausgebildete Tragestruktur (10) aufweisen und die Hebeeinheiten (5) an der Tragestruktur (10), vorzugsweise lösbar, befestigt sind.

7. Beladesystem nach Anspruch 6, **dadurch gekennzeichnet, dass** die Tragestruktur (10) Mittel zur lösbaren Befestigung der Hebeeinheiten (5) aufweist, wobei die Mittel zur lösbaren Befestigung der Hebeeinheiten (5) vorzugsweise eine Rastnase (9) und/oder eine Rastnut (11) ist bzw. sind.

8. Beladesystem nach einem der Ansprüche 1 bis 7, **dadurch gekennzeichnet, dass** eine Hebeeinheit (5) einen Führungsrahmen (12) umfasst, an oder in welchem das zumindest eine Auflageelement (6) bewegbar, vorzugsweise linear verschiebbar, gehalten ist.

9. Beladesystem nach einem der Ansprüche 1 bis 8, **dadurch gekennzeichnet, dass** der Führungsrahmen (12) zumindest zwei Befestigungsschenkel (13,14) aufweist, über welche die Befestigung der Hebeeinheit (5) an einem Fördermittel (2), vorzugsweise an dessen Tragestruktur (10), erfolgt.

10. Beladesystem nach Anspruch 9, **dadurch gekennzeichnet, dass** der Abstand zwischen den zumindest zwei Befestigungsschenkeln (13,14) mittels eines, vorzugsweise im Führungsrahmen (12) gehaltenen, Fixierelementes (15) einstellbar ist.

11. Beladesystem nach einem der Ansprüche 8 bis 10, **dadurch gekennzeichnet, dass** am oder im Führungsrahmen (12) zumindest ein die Bewegbarkeit des zumindest einen Auflageelementes (6) bewirkendes Schieberelement (16) angeordnet ist, wobei das zumindest eine Auflageelement (6) in einem der Förderebene (3) zugewandten Abschnitt des Schieberelementes (16) angeordnet ist, wobei vorzugsweise das Schieberelement (16) am oder im Führungsrahmen (12) beweglich gehalten ist.

12. Beladesystem nach einem der Ansprüche 8 bis 11, **dadurch gekennzeichnet, dass** am Führungsrahmen (12) ein mit dem zumindest einen Auflageelement (6), vorzugsweise mit dem zumindest einen Schieberelement (16), in Wirkverbindung stehender Antrieb (17) für die Bewegung des zumindest einen Auflageelementes (6) bzw. Schieberelementes (16) angeordnet ist.

13. Beladesystem nach einem der Ansprüche 1 bis 12, **dadurch gekennzeichnet, dass** eine Hebeeinheit (5) zumindest zwei zueinander beabstandete Auflageelemente (6) umfasst und zwischen den zumindest zwei Auflageelementen (6) ein Fördermittel (2) verlaufend angeordnet ist, wobei vorzugsweise das zwischen den zumindest zwei Auflageelementen (6) verlaufende Fördermittel (2) am Fördergestell (1) befestigt ist.

14. Beladesystem nach einem der Ansprüche 1 bis 13, **dadurch gekennzeichnet, dass** ein Zustelltisch (18) vorgesehen ist, welcher dazu ausgelegt ist, die plattenförmigen Objekte (4) in der zumindest einen Förderebene (3) mittels Zustellfördermittel (19) in zumindest zwei zueinander rechtwinkelig verlaufenden Richtungen linear zu bewegen und mittels Zustelldrehmittel (20) zu drehen, wobei die Zustellfördermittel (19) dazu ausgelegt sind, die plattenförmigen Objekte (4) auf zumindest ein Fördermittel (2) des Fördergestells (1) zu übergeben.

15. Beladesystem nach einem der Ansprüche 1 bis 14, **dadurch gekennzeichnet, dass** die Hebeeinheit (5) umfasst:
- einen Führungsrahmen (12), welcher zumindest zwei Befestigungsschenkel (13,14) aufweist, zur, vorzugsweise lösbaren, Befestigung an einer Tragestruktur (10) eines Fördermittels (2);
- zumindest ein Schieberelement (16), welches am oder im Führungsrahmen (12) beweglich, vorzugsweise linear verschiebbar, gehalten ist;
- zumindest ein Auflageelement (6) für ein plattenförmiges Objekt, insbesondere eine Glasplatte, welches Auflageelement (6) am Schieberelement (16) angeordnet ist; sowie
- einen am Führungsrahmen (12) angeordneten Antrieb (17), der in Wirkverbindung mit dem zumindest einen Schieberelement (16) steht, um diesen am bzw. im Führungsrahmen (12) zu bewegen, vorzugsweise linear zu verschieben.

16. Verwendung eines Beladesystems nach einem der Ansprüche 1 bis 14 zum Beladen und/oder Entladen eines Härteofens (21) mit plattenförmigen Objekten (4), insbesondere mit Glasplatten.

17. Verfahren zum Beladen eines von einem Beladesystem nach einem der Ansprüche 1 bis 14 bereitgestellten Fördergestells (1) mit plattenförmigen Objekten (4), insbesondere mit Glasplatten, umfassend folgende Schritte:
- Auflegen/Befördern eines ersten plattenförmigen Objektes (4a) auf eine durch mehrere, am Fördergestell (1) angeordnete, Fördermittel (2) ausgebildete Förderebene (3);
- Fördern des ersten plattenförmigen Objektes (4a) durch eines oder mehrere der Fördermittel (2) in eine erste Förderposition (22);
- Abheben des ersten plattenförmigen Objektes (4a) an seiner ersten Förderposition (22) durch an einem oder an mehreren der Fördermittel (2) angeordnete Hebeeinheiten (5) von der Förderebene (3);
- Auflegen/Befördern eines zweiten plattenförmigen Objektes (4b) auf die Förderebene (3);
- Fördern des zweiten plattenförmigen Objektes (4b) durch eines oder mehrere der selben Fördermittel (2) in eine zweite Förderposition (23), wobei durch Betätigung des einen oder der mehreren Fördermittel (2) die abgehobene Position des ersten plattenförmigen Objektes (4a) an seiner ersten Förderposition (22) nicht verändert wird;
- Absenken des ersten plattenförmigen Objektes (4a) auf die Förderebene (3) an seiner ersten Förderposition (22).

18. Verfahren nach Anspruch 17, **gekennzeichnet durch** folgende weitere Verfahrensschritte:
- Abheben des ersten und/oder des zweiten plattenförmigen Objektes durch an einem oder an mehreren der Fördermittel (2) angeordnete Hebeeinheiten (5) von der Förderebene (3);
- Auflegen/Befördern eines dritten plattenförmigen Objektes (4c) auf die Förderebene (3);
- Absenken des ersten und des zweiten plattenförmigen Objektes auf die Förderebene (3);
- gegebenenfalls Fördern des dritten plattenförmigen Objektes (4c) durch eines oder mehrere der Fördermittel (2) in eine dritte Förderposition (24) nach dem Auflegen/Befördern des dritten plattenförmigen Objektes (4c) auf die Förderebene (3) und vor dem Absenken des ersten und des zweiten plattenförmigen Objektes (4a,4b) auf die Förderebene (3).

19. Verfahren nach einem der Ansprüche 17 oder 18, **dadurch gekennzeichnet, dass** das erste und das zweite plattenförmige Objekt (4a,4b) nach dem Absenken des ersten plattenförmigen Objekts (4a), oder gegebenenfalls das erste, das zweite und das dritte plattenförmige Objekt (4a,4b,4c) nach dem Absenken des ersten und des zweiten plattenförmigen Objektes (4a,4b), durch eines oder mehrere der Fördermittel (2) auf die Förderebene (3) gemeinsam weiterbefördert werden.

20. Verfahren nach einem der Ansprüche 17 bis 19, **dadurch gekennzeichnet, dass** das erste und/oder das zweite und/oder gegebenenfalls das dritte plattenförmige Objekt (4a, 4b, 4c) mittels eines oder mehrerer der Fördermittel (2) in einen Härteofen (21) gefördert wird.

## Claims

1. Loading system for plate-shaped objects (4), in particular for glass plates, comprising a conveyor frame (1) with at least one conveyor plane (3), formed by a plurality of conveying means (2), for the plate-shaped objects (4),
wherein
- the loading system has lifting units (5),
- which lifting units (5) are arranged underneath the at least one conveyor plane (3), wherein
- the lifting units (5) each have a bearing surface (7), formed by at least one bearing element (6), for the plate-shaped objects (4), which bearing surface (7) can be moved between a position underneath the at least one conveyor plane (3) and a position above the at least one conveyor plane (3),
**characterized in that** a control and/or regulating device (8) is provided, which is equipped to control and/or to regulate the conveying means (2) individually or merged into groups (2a, 2b, 2c), wherein the conveying means (2), controlled and or regulated individually and/or as groups (2a, 2b, 2c) by the control and/or regulating device (8), are respectively driven by means of a separate drive means, and wherein the loading system is additionally equipped to convey a first plate-shaped object (4a) to a first conveying position (22) on the conveyor frame (1) by means of the conveying means (2) and to lift it away from the conveying means (2) at the first conveying position (22) by means of the lifting units (5), in order to bring additional plate-shaped objects (4b, 4c) onto the conveyor frame (1) and into a respective conveying position (23, 24) by means of the same conveying means (2), without thereby moving the first plate-shaped object (4a).

2. Loading system according to claim 1, **characterized in that** the conveying means (2) comprise belt conveyors, conveyor rollers, or conveyor drums.

3. Loading system according to one of claims 1 or 2, **characterized in that** a control and/or regulating device (8) is provided, which is equipped to control and/or to regulate the lifting units (5) individually and/or merged into groups.

4. Loading system according to one of claims 1 to 3, **characterized in that** the lifting units (5) are fixed, preferably detachably, to the conveying means (2).

5. Loading system according to claim 4, **characterized in that** the lifting units (5) have means for detachable fixing to a conveying means (2), wherein the means for detachable fixing to a conveying means (2) is or are preferably a latching lug (9) and/or a latching groove (11).

6. Loading system according to one of claims 1 to 5, **characterized in that** the conveying means (2) has or have a preferably profile-like support structure (10), and the lifting units (5) are fixed, preferably detachably, to the support structure (10).

7. Loading system according to claim 6, **characterized in that** the support structure (10) has means for the detachable fixing of the lifting units (5), wherein the means for the detachable fixing of the lifting units (5) is or are preferably a latching lug (9) and/or a latching groove (11).

8. Loading system according to one of claims 1 to 7, **characterized in that** a lifting unit (5) comprises a guide frame (12), on or in which the at least one bearing element (6) is mounted to be movable, preferably linearly displaceable.

9. Loading system according to one of claims 1 to 8, **characterized in that** the guide frame (12) has at least two fixing legs (13, 14), via which the fixing of the lifting unit (5) to the conveying means (2), preferably to its support structure (10), is carried out.

10. Loading system according to claim 9, **characterized in that** the distance between the at least two fixing legs (13, 14) is adjustable by means of a fixing element (15) preferably mounted in the guide frame (12).

11. Loading system according to one of claims 8 to 10, **characterized in that** at least one pusher element (16) is arranged on or in the guide frame (12) for effecting the movability of the at least one bearing element (6), wherein the at least one bearing element (6) is arranged in a section of the pusher element (16) facing the conveyor plane (3), wherein the pusher element (16) is preferably moveably mounted on or in the guide frame (12).

12. Loading system according to one of claims 8 to 11, **characterized in that** a drive (17) for moving the at least one bearing element (6) or pusher element (16) is arranged on the guide frame (12) in operative connection with the at least one bearing element (6), preferably with the at least one pusher element (16).

13. Loading system according to one of claims 1 to 12, **characterized in that** a lifting unit (5) comprises at least two bearing elements (6) spaced apart from one another, and a conveying means (2) is arranged to extend between the at least two bearing elements (6), wherein the conveying means (2) extending between the at least two bearing elements (6) is preferably fixed on the conveyor frame (1).

14. Loading system according to one of claims 1 to 13, **characterized in that** an infeed table (18) is provided, which is designed to move the plate-shaped objects (4) in the at least one conveying plane (3) in at least two directions running linearly perpendicular to one another by means of infeed conveying means (19), and to rotate them by means of infeed rotation means (20), wherein the infeed conveying means (19) are designed to transfer the plate-shaped objects (4) onto at least one conveying means (2) of the conveyor frame (1).

15. Loading system according to one of claims 1 to 14, **characterized in that** the lifting unit (5) comprises:
- a guide frame (12) which has at least two fixing legs (13, 14), for, preferably detachable, fixing to a support structure (10) of a conveying means (2);
- at least one pusher element (16), which is moveably mounted, preferably linearly displaceable, on or in the guide frame (12);
- at least one bearing element (6) for a plate-shaped object, in particular a glass plate, which bearing element (6) is arranged on the pusher element (16); and
- a drive (17), arranged on the guide frame (12), which is in operative connection with the at least one pusher element (16), in order to move, preferably to linearly displace, the same on or in the guide frame (12).

16. Use of a loading system according to one of claims 1 to 14 for loading and/or unloading a tempering furnace (21) with plate-shaped objects (4), in particular glass plates.

17. Method for loading a conveyor frame (1), provided by a loading system according to one of claims 1 to 14, with plate-shaped objects (4), in particular with glass plates, comprising the following steps:
- Placing/Conveying a first plate-shaped object (4a) onto a conveying plane (3) formed by a plurality of conveying means (2) arranged on the conveyor frame (1);
- Conveying the first plate-shaped object (4a) into a first conveying position (22) by one or more of the conveying means (2);
- Lifting the first plate-shaped object (4a) at its first conveying position (22) from the conveying plane (3) by lifting units (5) arranged on one or more of the conveying means (2);
- Placing/Conveying a second plate-shaped object (4b) onto the conveying plane (3);
- Conveying the second plate-shaped object (4b) into a second conveying position (23) by one or more of the same conveying means (2), wherein the lifted position of the first plate-shaped object (4a) at its first conveying position (22) is not changed by actuating the one or more conveying means (2);
- Lowering the first plate-shaped object (4a) onto the conveying plane (3) at its first conveying position (22).

18. Method according to claim 17, **characterized by** the following additional method steps:
- Lifting the first and/or the second plate-shaped object(s) from the conveying plane (3) by lifting units (5) arranged on one or more of the conveying means (2);
- Placing/Conveying a third plate-shaped object (4c) onto the conveying plane (3);
- Lowering the first and the second plate-shaped objects onto the conveying plane (3);
- If applicable, conveying the third plate-shaped object (4c) into a third conveying position (24) by one or more of the conveying means (2) after placing/conveying the third plate-shaped object (4c) onto the conveying plane (3) and before lowering the first and the second plate-shaped objects (4a, 4b) onto the conveying plane (3).

19. Method according to one of claims 17 or 18, **characterized in that** the first and the second plate-shaped objects (4a, 4b) are, after lowering the first plate-shaped object (4a), or if applicable, the first, the second, and the third plate-shaped objects (4a, 4b, 4c) are, after lowering the first and the second plate-shaped objects (4a, 4b), collectively further conveyed onto the conveyor plane (3) by one or more of the conveying means (2).

20. Method according to one of claims 17 to 19, **characterized in that** the first and/or the second and/or if applicable, the third plate-shaped object(s) (4a, 4b, 4c) is/are conveyed into a tempering furnace (21) by means of one or more of the conveying means (2).

## Revendications

1. Système de chargement d'objets en forme de plaque (4), en particulier de plaques de verre, comprenant un châssis de transport (1) avec au moins un niveau de transport (3) formé de plusieurs moyens de transport (2) pour les objets en forme de plaque (4),
dans lequel
- le système de chargement présente des unités de levage (5),
- lesquelles unités de levage (5) sont disposées en dessous d'au moins un niveau de transport (3), dans lequel
- les unités de levage (5) présentent respectivement une surface de support (7) pour les objets en forme de plaque (4) formée par au moins un élément de support (6), laquelle surface de support (7) est mobile entre une position en-dessous d'au moins un niveau de transport (3) et une position au-dessus d'au moins un niveau de transport (3),
**caractérisé en ce qu'**un dispositif de commande et/ou de régulation (8) est prévu, lequel est conçu pour commander et/ou réguler les moyens de transport (2) individuellement et/ou en groupes (2a,2b,2c), dans lequel les moyens de transport (2) commandés et/ou régulés individuellement et/ou en groupe (2a, 2b, 2c) par le dispositif de commande et/ou de régulation (8) sont respectivement entraînés au moyen d'un moyen d'entraînement distinct, et dans lequel le système de chargement est conçu pour charger un premier objet en forme de plaque (4a) au moyen du moyen de transport (2) vers une première position de transport (22) sur le châssis de transport (1) et pour les soulever du moyen de transport (2) à la première position de transport (22) au moyen des unités de levage (5) afin d'amener d'autres objets en forme de plaque (4b, 4c) au moyen du même moyen de transport (2) sur le châssis de transport (1) dans une position de transport respective (23, 24), sans déplacer le premier objet en forme de plaque (4a).

2. Système de chargement selon la revendication 1, **caractérisé en ce que** les moyens de transport (2) comprennent des convoyeurs à bande, des galets de transport ou des rouleaux de transport.

3. Système de chargement selon une des revendications 1 ou 2, **caractérisé en ce qu'**il est prévu un dispositif de commande et/ou de régulation (8), qui est conçu pour commander et/ou réguler les unités de levage (5) individuellement et/ou en groupe.

4. Système de chargement selon une des revendications 1 à 3, **caractérisé en ce que** les unités de levage (5) sont fixées au moyen de transport (2), de préférence de manière amovible.

5. Système de chargement selon la revendication 4, **caractérisé en ce que** les unités de levage (5) présentent des moyens de fixation amovible à un moyen de transport (2), dans lequel les moyens de fixation amovible à un moyen de transport (2) est, resp. sont de préférence une patte de verrouillage (9) et/ou une rainure de verrouillage (11).

6. Système de chargement selon une des revendications 1 à 5, **caractérisé en ce que** le ou les moyens de transport (2) présentent une structure de support (10) de préférence profilée et les unités de levage (5) sont fixées à la structure de support (10), de préférence de manière amovible.

7. Système de chargement selon la revendication 6, **caractérisé en ce que** la structure de support (10) présente des moyens pour fixer de manière amovible les unités de levage (5), dans lequel les moyens pour fixer de manière amovible les unités de levage (5) est, resp. sont de préférence une patte de verrouillage (9) et/ou une rainure de verrouillage (11).

8. Système de chargement selon une des revendications 1 à 7, **caractérisé en ce qu'**une unité de levage (5) comprend un cadre de guidage (12), sur ou dans lequel au moins un élément de support (6) est maintenu de manière mobile, de préférence déplaçable linéairement.

9. Système de chargement selon une des revendications 1 à 8, **caractérisé en ce que** le cadre de guidage (12) présente au moins deux pieds de fixation (13, 14) par lesquels l'unité de levage (5) est fixée à un moyen de transport (2), de préférence à sa structure de support (10).

10. Système de chargement selon la revendication 9, **caractérisé en ce que** la distance entre les au moins deux pattes de fixation (13, 14) est réglable au moyen d'un élément de fixation (15), de préférence maintenu dans le cadre de guidage (12).

11. Système de chargement selon une des revendications 8 à 10, **caractérisé en ce qu'**au moins un élément coulissant (16) est disposé sur ou dans le cadre de guidage (12) pour assurer la mobilité d'au moins un élément de support (6), dans lequel le au moins un élément de support (6) est disposé dans une section de l'élément coulissant (16) tournée vers le niveau de transport (3), dans lequel de préférence l'élément coulissant (16) est maintenu de manière mobile sur ou dans le cadre de guidage (12).

12. Système de chargement selon une des revendications 8 à 11, **caractérisé en ce que** sur le cadre de guidage (12), un entraînement (17), en liaison fonctionnelle avec au moins un élément de support (6), de préférence avec au moins un élément coulissant (16) est disposé pour le déplacement du au moins un élément de support (6) ou élément coulissant (16).

13. Système de chargement selon une des revendications 1 à 12, **caractérisé en ce qu'**une unité de levage (5) comprend au moins deux éléments de support (6) espacés l'un de l'autre et un moyen de transport (2) est disposé entre les au moins deux éléments de support (6), dans lequel de préférence le moyen de transport (2) s'étendant entre les au moins deux éléments de support (6) est fixé au châssis de transport (1).

14. Système de chargement selon une des revendications 1 à 13, **caractérisé en ce qu'**il comprend une table d'alimentation (18), qui est conçue pour transporter les objets en forme de plaque (4) dans au moins un plan de transport (3) au moyen de moyens de transport d'alimentation (19) à déplacer linéairement dans au moins deux directions s'étendant à angle droit l'une par rapport à l'autre et à tourner au moyen de moyens de rotation d'alimentation (20), dans lequel les moyens de transport d'alimentation (19) sont conçus pour transférer les objets en forme de plaque (4) vers au moins un moyen de transport (2) du châssis de transport (1).

15. Système de chargement selon une des revendications 1 à 14, **caractérisé en ce que** l'unité de levage (5) comprend :
- un cadre de guidage (12) qui présente au moins deux pieds de fixation (13, 14) pour une fixation, de préférence amovible, à une structure de support (10) d'un moyen de transport (2) ;
- au moins un élément coulissant (16), qui est maintenu de manière mobile sur ou dans le cadre de guidage (12), de préférence déplaçable linéairement ;
- au moins un élément de support (6) pour un objet en forme de plaque, en particulier une plaque de verre, lequel élément de support (6) est disposé sur un élément coulissant (16); ainsi que
- un entraînement (17) disposé sur le cadre de guidage (12), qui est relié fonctionnellement à au moins un élément coulissant (16), afin de le déplacer sur ou dans le cadre de guidage (12), de préférence pour le déplacer linéairement.

16. Utilisation d'un système de chargement selon une des revendications 1 à 14 pour charger et/ou décharger un four de trempe (21) avec des objets en forme de plaque (4), en particulier avec des plaques de verre.

17. Procédé de chargement d'un châssis de transport (1) à partir d'un système de chargement selon une des revendications 1 à 14, pourvu d'objets en forme de plaque (4), en particulier de plaques de verre, comprenant les étapes suivantes :
- le placement/transport d'un premier objet en forme de plaque (4a) sur un niveau de transport (3) formé par plusieurs moyens de transport (2) disposés sur le châssis de transport (1),
- le transport du premier objet en forme de plaque (4a) par un ou plusieurs des moyens de transport (2) dans une première position de transport (22);
- le levage du premier objet en forme de plaque (4a) à sa première position de transport (22) au moyen d'unités de levage (5) disposées sur un ou plusieurs des moyens de transport (2) à partir du niveau de transport (3) ;
- le placement/transport d'un deuxième objet en forme de plaque (4b) sur le niveau de transport (3) ;
- le transport du deuxième objet en forme de plaque (4b) par un ou plusieurs des mêmes moyens de transport (2) dans une deuxième position de transport (23), dans lequel, en actionnant le ou les moyens de transport (2), la position soulevée du premier objet en forme de plaque (4a) à sa première position de transport (22) n'est pas modifiée;
- la descente du premier objet en forme de plaque (4a) sur le plan de transport (3) à sa première position de transport (22).

18. Procédé selon la revendication 17, **caractérisé par** les étapes supplémentaires suivantes :
- le levage du premier et/ou du deuxième objet en forme de plaque par des unités de levage (5) disposées sur un ou plusieurs des moyens de transport (2) à partir du niveau de transport (3) ;
- le placement/transport d'un troisième objet en forme de plaque (4c) sur le niveau de transport (3) ;
- la descente du premier et du deuxième objet en forme de plaque sur le niveau de transport (3) ;
- le cas échéant, le transport du troisième objet en forme de plaque par un ou plusieurs des moyens de transport (2) dans une troisième position de transport (24) après le placement/transport du troisième objet en forme de plaque (4c) sur le niveau de transport (3) et avant l'abaissement du premier et du deuxième objet en forme de plaque (4a, 4b) au niveau de transport (3).

19. Procédé selon une des revendications 17 ou 18, **caractérisé en ce que** le premier et le deuxième objet en forme de plaque (4a, 4b) après l'abaissement du premier objet en forme de plaque (4a), ou le cas échéant, le premier, le deuxième et le troisièmes objets en forme de plaque (4a, 4b, 4c) après l'abaissement du premier et du deuxième objets en forme de plaque (4a, 4b) sont transportés conjointement par un ou plusieurs des moyens de transport (2) jusqu'au niveau de transport (3).

20. Procédé selon une des revendications 17 à 19, **caractérisé en ce que** le premier et/ou le deuxième et/ou le cas échéant le troisième objet en forme de plaque (4a, 4b, 4c) est transporté au moyen d'un ou plusieurs des moyens de transport (2) dans un four de trempe (21).
